# EUROPEAN PATENT APPLICATION

(11) **EP 4 593 351 A1**
(43) Date of publication of application: **30.07.2025**
(21) Application number: 23876206.6
(22) Date of filing: 16.06.2023
(51) Int. Cl.: H04L 47/70

(54) **SERVICE EXECUTION METHOD AND COMPUTING SYSTEM**

(30) Priority: 13.10.2022 CN 202211258172
(71) Applicant: Huawei Technologies Co., Ltd., Shenzhen, Guangdong 518129 (CN)
(72) Inventor: ZHOU, Chao, Shenzhen, Guangdong 518129 (CN); PENG, Biyu, Shenzhen, Guangdong 518129 (CN); LIU, Qing, Shenzhen, Guangdong 518129 (CN)
(74) Representative: Pfenning, Meinig & Partner mbB
(86) International application number: PCT/CN2023/100758
(87) International publication number: WO 2024/077995

(57) **Abstract**

Embodiments of this application provide a service execution method and a computing system, and relate to the field of network technologies. The method includes: determining, in advance before a service is executed, a network device that needs to be used for the service, and regulating a power state of the network device in advance to a state in which the service can be executed, so that service execution is not interrupted while the power state of the network device is adjusted.

## Description

This application claims priority to Chinese Patent Application No. 202211258172.X, filed with the China National Intellectual Property Administration on October 13, 2022 and entitled "SERVICE EXECUTION METHOD AND COMPUTING SYSTEM", which is incorporated herein by reference in its entirety.

### TECHNICAL FIELD

Embodiments of this application relate to the field of network technologies, and in particular, to a service execution method and a computing system.

### BACKGROUND

Currently, with development of internet service technologies, distributed computing technologies, and the like, data center network (data center network, DCN) technologies are widely applied. A data center network may include a computing node and a switch. A data center can implement service data forwarding of the computing node and device interconnection through the switch.

In recent years, as computing power of a single chip increases year by year and a scale of data center cluster networking gradually increases, the data center has an increasingly high requirement on network performance, and a port network bandwidth of the switch is increasingly high, increasing overall energy consumption of the switch.

In a related technology, the switch is mainly powered on or off based on a periodically monitored service load status of the switch in the data center network. Before the switch is powered on or off, a service that is being executed needs to be stopped in the related technology, causing service interruption.

### SUMMARY

To resolve the foregoing technical problem, this application provides a service execution method and a computing system. In the method, before a service is executed, a network device that needs to be used for the service may be determined in advance, and a power state of the network device is regulated in advance to a state in which the service can be executed, so that service execution is not interrupted while the power state of the network device is adjusted.

In a possible implementation, this application provides a service execution method, applied to a computing system. The computing system includes a scheduler and a network controller. The method includes: The scheduler schedules, for a received service, a computing resource for executing the service, and sends information about the computing resource to the network controller. The network controller determines, based on the information about the computing resource, a network device that needs to be used when the computing resource executes the service. The network controller determines a state of the network device, and when determining that the state of the network device is a state in which the service can be executed, returns indication information to the scheduler. The scheduler sends the service to the computing resource based on the indication information to execute the service.

The computing resource may indicate one computing node in a computing cluster, indicate a plurality of computing nodes, or indicate at least one CPU in one or more computing nodes. This is not limited herein.

Herein, an example in which the computing resource that is for executing the service and that is scheduled by the scheduler for the service is a computing node 1 is used for description.

The network device in this embodiment may be a switch.

The network device that needs to be used when the computing resource executes the service is alternatively a network device that needs to be used in a process of executing the service.

The state of the network device may be a power state of the network device. When the state of the network device is the state in which the service can be executed, it indicates that the power state of the network device can meet an execution requirement on the service.

The network controller may store a state of each device in a network. For example, when the computing system is initialized, the network controller may collect the state of each network device from each device in the network.

For example, the indication information may be preset information, and the indication information may indicate that a power state of a switch that needs to be used for a currently scheduled service and a power state of a port of the switch are the state (which may also be referred to as an "available state") in which the service can be executed.

In this embodiment of this application, before sending the scheduled service to the computing resource for execution, the computing system may determine, as the state in which the service can be executed, a state of the network device that needs to be used when the computing resource executes the service, so that before the service is executed, a power state of a network device that is used to forward service data of the service can be used to execute the service. In this way, the network device that needs to be used for the service can be determined in advance before the service is executed, and the power state of the network device is regulated in advance to the state in which the service can be executed, so that the power state of the network device can be dynamically adjusted with reference to the service, and the service execution is not interrupted.

In a possible implementation, that the network controller determines, based on the information about the computing resource, a network device that needs to be used when the computing resource executes the service includes: The network controller determines, based on a network topology and the information about the computing resource that are stored in the network controller, the network device that needs to be used when the computing resource executes the service. The network topology includes a diagram of a connection relationship between computing resources that are in the computing system and that are connected by using the network device.

The network topology may include a topology relationship, and the topology relationship may include the connection relationship between the computing resources that are in the computing system and that are connected by using the network device.

For example, the topology relationship may include a connection relationship between the computing node and the port of the switch, and a connection relationship between ports of different switches.

For example, the computing resource is the computing node 1. A switch that is directly or indirectly connected to the computing node 1 in the topology relationship and a port corresponding to the switch may be a network device that needs to be used when the computing node 1 executes the service.

In this embodiment of this application, the network controller may determine, with reference to the topology relationship based on a computing resource scheduled by the scheduler each time for the service, a network device that needs to be used when the computing resource executes the service, to enable a state of the network device to be the available state before the service is executed, so that it can be ensured that service data is reliably forwarded by the network device in a service execution process in the computing system.

In a possible implementation, the network topology further includes the state of each device in the network, and that the network controller determines a state of the network device includes: When determining, based on the network topology, that the network device is in a power-off state, the network controller sends a power-on instruction to the network device, to enable the network device. When determining, based on the network topology, that the network device is in a power-on state, but a port configured to connect to the computing resource is in an abnormal working state, the network controller sends a power-on instruction of the port to the network device, to adjust the port to be in a normal working state.

The state of each device in the network may include a power state of each network device in the computing system.

For example, the network topology may include a topology state, and the topology state may include current power states of each switch and a port of the switch in the network topology.

When the network controller determines, based on the topology state, that a network device (for example, a third switch) that needs to be used for the currently scheduled service is in the power-off state, the network controller may send the power-on instruction (for example, the power-on instruction may indicate the power-on state) to the third switch, to enable the third switch.

For example, that the third switch is in the power-off state may be that hardware (for example, a CPU) on a control plane and/or hardware on a data plane are/is in the power-off state.

For example, if both the control plane and the data plane of the third switch are in the power-off state, the power-on instruction may enable the hardware on the control plane to be in the power-on state, and optionally, further enable a switch chip on the data plane and a circuit that controls running of the switch chip to be in the power-on state.

For example, if the third switch is in a control plane power-on state, but the data plane is in the power-off state, the power-on instruction may enable the switch chip on the data plane and the circuit that controls the running of the switch chip to be in the power-on state, so that the third switch is in a data plane power-on state.

When the network controller determines, based on the topology state, that the network device (for example, the third switch) is in the power-on state (herein, both the data plane and the control plane are in the power-on state), but the port configured to connect to the computing resource is in the abnormal working state, where the abnormal working state may be the power-off state or a low-speed state (for example, a state that is not a highest link rate), the network controller may send, to the third switch, a power-on instruction for the port, so that the third switch can adjust the port to be in the normal working state. For example, if the port of the third switch is in the power-off state, the normal working state herein may include the power-on state, and optionally include a state in which a link rate is x1, x2, x4, or x8. For example, if the port of the third switch is in the power-on state, but the link rate is x2 (the service cannot be executed based on the rate, and a service execution requirement cannot be met), the normal working state herein may include a state in which the link rate is higher than x2, such as x4 or x8.

In this way, in this embodiment of this application, the network controller may implement more refined control on a power state of the switch in a multi-level power state regulation manner of powering on the switch, powering on the port of the switch, and increasing a link rate of the port of the switch. In comparison with a manner in which an idle switch is directly powered off in a related technology, an energy consumption optimization effect is better.

In a possible implementation, the method further includes: The network controller records information about the network device that is determined by the network controller and that needs to be used when the computing resource executes the service. At an interval of a period of time, the network controller determines, based on information that is recorded by the network controller and that is about network devices corresponding to a plurality of services, a network device that needs to be adjusted in the network topology, and determines an adjustment policy. The network controller sends the adjustment policy to the network device that needs to be adjusted, to indicate the network device to adjust the state of the network device according to the adjustment policy.

Each time the network controller receives information that is sent by the scheduler and that is about the computing resource scheduled for executing the service, the network controller may record once information about a switch that needs to be used when the computing resource determined by the network controller is used to execute the service and information about a port of the switch (a specific implementation of determining the switch and the port of the switch each time may also be implemented with reference to the network topology, and details are not described herein again). In addition, a switch that needs to adjust a state in the network topology and a port of the switch are determined periodically based on the recorded information about the switch and the port of the switch. The determined switch that needs to adjust the state and the port of the switch herein are a switch whose power consumption is to be reduced and a port of the switch. In addition, the network controller may further determine, with reference to a current power state of a switch whose state is to be adjusted and a current power state of a port of the switch, an adjustment policy of the switch, and indicate the switch to adjust the state according to the adjustment policy.

In this embodiment of this application, the network scheduler may determine, with reference to computing resources scheduled by the scheduler for each service for a plurality of times, that power consumption of which switches or ports of the switches needs to be reduced, to perform power management for a corresponding switch to reduce the power consumption, to reduce network energy consumption.

In a possible implementation, that the network controller determines, based on information that is recorded by the network controller and that is about network devices corresponding to a plurality of services, a network device that needs to be adjusted in the network topology, and determines an adjustment policy further includes: When determining that a network device in the network topology is in a power-on state and a quantity of times that the network device is not used exceeds a first threshold, the network device is determined as the network device that needs to be adjusted, where the adjustment policy is powering off the network device. Alternatively, when determining that a network device in the network topology is in a power-on state, and a quantity of times that a first port in the network device is not used exceeds a second threshold, the network device is determined as the network device that needs to be adjusted, where the adjustment policy is powering off the first port. Alternatively, when determining that a network device in the network topology is in a power-on state, a quantity of times that a first port in the network device is not used exceeds a second threshold, and a rate of the first port is not a lowest rate, the network device is determined as the network device that needs to be adjusted, where the adjustment policy is performing rate reduction processing on the first port. Alternatively, when determining that a network device in the network topology is in a power-on state, a quantity of times that a first port in the network device is not used exceeds a second threshold, and a rate of the first port in the network device is a lowest rate, the network device is determined as the network device that needs to be adjusted, where the adjustment policy is powering off the first port.

For example, when the network controller determines that at least one network device in the network topology is in the power-on state (for example, the data plane is in the power-on state, but all ports are in a power-off state), and a quantity of times that the network device is not used in the period of time exceeds the first threshold, in other words, a use frequency is low, the network controller may determine that the network device is the network device that needs to be adjusted (which is power consumption reduction herein), and the adjustment policy is powering off (for example, all hardware on the data plane is powered off) the network device.

Alternatively, when the network controller determines that at least one network device in the network topology is in the power-on state, and a quantity of times that a first port in the network device is not used exceeds the second threshold, in other words, use frequency of at least one port in the network device is low in the period of time, the network controller may determine that the network device is the network device that needs to be adjusted (which is power consumption reduction herein), and the adjustment policy is powering off the first port.

Alternatively, when the network controller determines that a network device in the network topology is in a power-on state, a quantity of times that a first port in the network device is not used exceeds the second threshold, and a rate of the first port is not the lowest rate (for example, the lowest rate is x1), the network controller may determine that the network device is the network device that needs to be adjusted (which is power consumption reduction herein), and the adjustment policy is performing rate reduction processing on the first port.

Alternatively, when determining that a network device in the network topology is in a power-on state, a quantity of times that a first port in the network device is not used exceeds the second threshold, and a rate of the first port in the network device is a lowest rate (for example, x1), the network controller may determine that the network device may be the network device that needs to be adjusted (which is power consumption reduction herein), and the adjustment policy is powering off the first port.

In this way, in this embodiment of this application, the network controller may implement the more refined control on the power state of the switch in a multi-level energy consumption management manner in a sequence of decreasing the port link rate of the switch, powering off the port of the switch, and powering off the switch. In comparison with the manner in which the idle switch is directly powered off in the related technology, the energy consumption optimization effect is better.

In a possible implementation, before the sending the adjustment policy to the network device that needs to be adjusted, to indicate the network device to adjust the state of the network device according to the adjustment policy, the method further includes: The network controller determines, according to the adjustment policy, a network device that needs to adjust a route in the network topology, and determines adjusted routing information. The network controller sends the adjusted routing information to the network device that needs to adjust the route, to enable the network device to update the route.

The network controller may determine, based on an adjustment policy determined for the network device that needs to be adjusted (which is power consumption reduction herein), for example, power-off is performed on which switch or which port of the switch, the network device that needs to adjust the route in the network topology.

The connection relationship between ports of different switches may be determined based on the topology relationship in the network topology. In this case, power-off of any switch or a port of the switch in the topology relationship may cause a route of a related switch that has a direct or indirect connection relationship with the switch or the port of the switch to change. Otherwise, an error may occur because a service is routed to the powered-off switch or the port of the switch. In this embodiment, the route of the related switch may be recalculated, and recalculated route information is sent to the related switch, so that the related switch updates the route.

In addition, in this embodiment, before a switch that is not used for a long time or frequently or a port of the switch is powered off, a route of a switch related to the switch or the port of the switch may be updated, to avoid a case in which a service running on another related switch is interrupted because the switch or the port of the switch is powered off.

In a possible implementation, this application provides a computing system. The computing system includes a scheduler and a network controller. The scheduler is configured to: schedule, for a received service, a computing resource for executing the service, and send information about the computing resource to the network controller. The network controller is configured to determine, based on the information about the computing resource, a network device that needs to be used when the computing resource executes the service. The network controller is configured to: determine a state of the network device, and when determining that the state of the network device is a state in which the service can be executed, return indication information to the scheduler. The scheduler is configured to send the service to the computing resource based on the indication information to execute the service.

In a possible implementation, the network controller is specifically configured to determine, based on a network topology and the information about the computing resource that are stored in the network controller, the network device that needs to be used when the computing resource executes the service. The network topology includes a diagram of a connection relationship between computing resources that are in the computing system and that are connected by using the network device.

In a possible implementation, the network topology further includes a state of each device in a network, and the network controller is specifically configured to: when the network controller determines, based on the network topology, that the network device is in a power-off state, send a power-on instruction to the network device, to enable the network device; or when the network controller determines, based on the network topology, that the network device is in a power-on state, but a port configured to connect to the computing resource is in an abnormal working state, send a power-on instruction of the port to the network device, to adjust the port to be in a normal working state.

In a possible implementation, the network controller is further configured to record information about the network device that is determined by the network controller and that needs to be used when the computing resource executes the service. The network controller is further configured to: at an interval of a period of time, determine, based on information that is recorded by the network controller and that is about network devices corresponding to a plurality of services, a network device that needs to be adjusted in the network topology, and determine an adjustment policy. The network controller is further configured to send the adjustment policy to the network device that needs to be adjusted, to indicate the network device to adjust the state of the network device according to the adjustment policy.

In a possible implementation, the network controller is specifically configured to: when determining that a network device in the network topology is in a power-on state and a quantity of times that the network device is not used exceeds a first threshold, determine that the network device is the network device that needs to be adjusted, where the adjustment policy is powering off the network device; when determining that a network device in the network topology is in a power-on state, and a quantity of times that a first port in the network device is not used exceeds a second threshold, determine that the network device is the network device that needs to be adjusted, where the adjustment policy is powering off the first port; when determining that network device in the network topology is in the power-on state, a quantity of times that a first port in the network device is not used exceeds a second threshold, and a rate of the first port is not a lowest rate, determine that the network device is the network device that needs to be adjusted, where the adjustment policy is performing rate reduction processing on the first port; or when determining that network device in the network topology is in the power-on state, a quantity of times that a first port in the network device is not used exceeds a second threshold, and a rate of the first port in the network device is a lowest rate, determine that the network device is the network device that needs to be adjusted, where the adjustment policy is powering off the first port.

In a possible implementation, the network controller is further configured to: determine, according to the adjustment policy, a network device that needs to adjust a route in the network topology, and determine adjusted routing information; and send the adjusted routing information to the network device that needs to adjust the route, to enable the network device to update the route.

Effect of the computing system in the foregoing implementations is similar to effect of the service execution method in the foregoing implementations. Details are not described herein again.

In a possible implementation, this application provides a service execution apparatus. The service execution apparatus includes one or more interface circuits and one or more processors. The interface circuit is configured to: receive a signal from a memory, and send the signal to the processor. The signal includes computer instructions stored in the memory. When the processor executes the computer instructions, the processor can implement the method according to any one of the foregoing implementations.

Effect of the service execution apparatus in this implementation is similar to the effect of the service execution method in the foregoing implementations. Details are not described herein again.

In a possible implementation, this application provides a computer-readable storage medium. The computer-readable storage medium stores a computer program. When the computer program is run on a computer or a processor, the computer or the processor is enabled to perform the method according to any one of the foregoing implementations.

Effect of the computer-readable storage medium in this implementation is similar to the effect of the service execution method in the foregoing implementations. Details are not described herein again.

In a possible implementation, this application provides a computer program product. The computer program product includes a software program. When the software program is executed by a computer or a processor, the method according to any one of the foregoing implementations is performed.

Effect of the computer program product in this implementation is similar to the effect of the service execution method in the foregoing implementations. Details are not described herein again.

### BRIEF DESCRIPTION OF DRAWINGS

To describe technical solutions in embodiments of this application more clearly, the following briefly introduces the accompanying drawings required for describing embodiments of this application. Apparently, the accompanying drawings in the following descriptions show merely some embodiments of this application, and a person of ordinary skill in the art may still derive other drawings from these accompanying drawings without creative efforts.
FIG. 1 shows an example of a diagram of network control in a related technology;
FIG. 2a shows an example of a diagram of a system architecture of a data center cluster;
FIG. 2b shows an example of a diagram of a service execution process;
FIG. 3a shows an example of a diagram of a service execution process;
FIG. 3b shows an example of a diagram of a conversion relationship of a power state;
FIG. 4a shows an example of a diagram of a service execution process;
FIG. 4b shows an example of a diagram of a service execution process;
FIG. 5a shows an example of a diagram of a service execution process;
FIG. 5b shows an example of a diagram of a service execution process;
FIG. 6 is a diagram of a structure of an apparatus according to an embodiment of this application; and
FIG. 7 is a diagram of a structure of a chip according to an embodiment of this application.

### DESCRIPTION OF EMBODIMENTS

The following clearly and completely describes technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used for distinguishing between different target objects, but are not used for describing a specific order of the target objects.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of embodiments of this application, unless otherwise stated, "a plurality of" means two or more. For example, a plurality of processing units mean two or more processing units, and a plurality of systems mean two or more systems.

Currently, with development of technologies such as internet service and distributed computing technologies, data center network (data center network, DCN) technologies are widely applied. A data center network may include a computing node, a network node, and a storage node. For example, the computing node may include a server used for computing, the network node may include a switch and a network cable connected to the switch, and the storage node may include a server used for data storage. The data center network may implement data forwarding of the computing node and device interconnection by using the network node.

In a related technology, after data center network construction (including a process of configuring a switch, a process of configuring a server, and the like) is completed, a load state of the network node may be monitored. Then, based on a service load state of a network node that is monitored for a long time, whether to increase a quantity of switches or power off an idle switch is manually determined in the future. Before the switch is powered on or off, a task that is being executed on the data center network needs to be stopped in the related technology. This may cause service interruption. In addition, in the related technology, a physical networking solution of the data center network needs to be re-planned due to power-on/off of some switches, and a global networking route needs to be re-configured. Then, after the power-on/off of the switch is completed, a previously interrupted service is recovered to be executed based on the re-planned route. In this case, a solution of managing a power state of the switch in the related technology interrupts service execution.

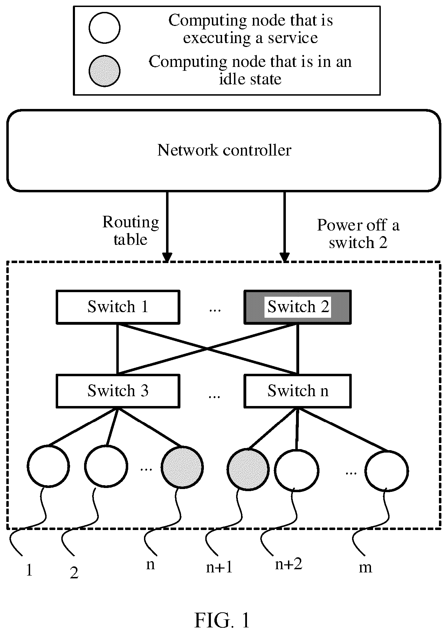

FIG. 1 shows an example of a diagram of network control in a related technology.

As shown in FIG. 1, after data center construction is completed, a data center network includes n switches and m computing nodes, where the switch may forward data of the computing node. As shown in FIG. 1, the n switches include a switch 1, a switch 2, a switch 3, ..., and a switch n shown in FIG. 1, where n is an integer greater than 3. The m computing nodes include a computing node 1, a computing node 2, ..., a computing node n, a computing node n+1, a computing node n+2, ..., and a computing node m shown in FIG. 1.

In the related technology, after data center network construction (including a process of configuring a switch, a process of configuring a server, and the like) is completed, in a service execution period of the data center network, a monitoring system of a data center may monitor network load states of the switches in the data center, and manually determine, based on the network load states of the switches that are monitored for a long time, whether to increase a quantity of switches or power off an idle switch in the future. For example, in FIG. 1, it is determined, by monitoring the network load states of the switches for a long time, that the switch 2 does not execute a data forwarding task for a long time (for example, one week or one month). In this case, a decision maker may decide to power off the switch 2. Before the switch 2 is powered off, the data center network needs to stop services that are being executed on the n switches and the m computing nodes shown in FIG. 1. This may cause service interruption. As shown in FIG. 1, a network controller may control the switch 2 to be powered off, and deliver, to a corresponding switch, a routing table of each switch (which is each switch other than the switch 2 in the n switches herein) that is recalculated because the switch 2 is powered off, to re-run an interrupted service.

In this case, in a power management solution for the switch in the related technology, a service that is being executed is interrupted, and a power state of the switch cannot be dynamically adjusted based on the service. Finally, in this solution, only power-on/off management is performed for power management of the switch, an optimization manner for network energy consumption is not flexible, and an optimization effect is poor.

To resolve the foregoing problems existing in a power management solution for a network node in the related technology, this application provides a service execution method and a service execution system. In the method, a service may be combined with a network, and which switches that do not need to execute a task can be determined with reference to a plurality of times of service scheduling information, to perform power management on a corresponding switch to reduce power consumption; and/or which switches that need to execute a task are determined with reference to each time of service scheduling information, and when a current power state of the corresponding switch cannot meet a task execution requirement, the power state of the corresponding switch may be adjusted, so that an adjusted power state meets the task execution requirement. When the current power state of the corresponding switch can meet the service execution requirement, the power state of the switch does not need to be adjusted in the method. In this way, the method may dynamically adjust the power state of the switch with reference to service information, to reduce energy consumption of the switch.

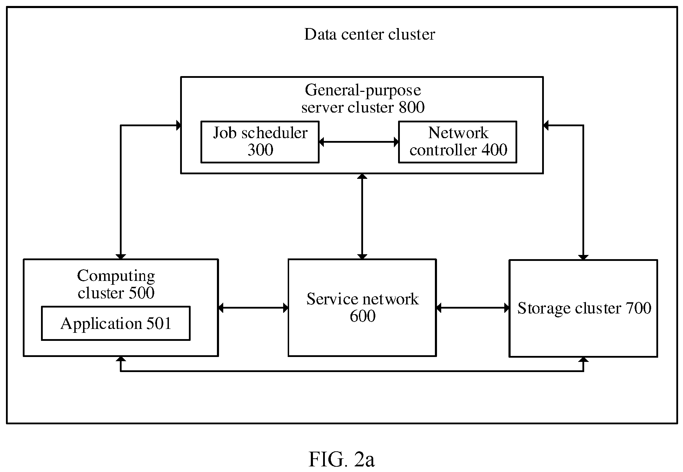

The service execution method and the service execution system in this application may be used in a data center cluster system. FIG. 2a is a diagram of a system architecture of a data center cluster.

As shown in FIG. 2a, the data center cluster may include a computing cluster 500, a service network 600, a storage cluster 700, and a general-purpose server cluster 800.

The computing cluster 500 includes a plurality of servers, and an application 501 may be installed and run on each server. Herein, a quantity and types of applications 501 installed on a same server are not limited, and applications installed on different servers are not limited. In addition, a function and an implementation of each application in the computing cluster 500 are also not limited in this application.

The service network 600 may include a plurality of switches and connection lines between the switches. The switch is configured to forward service data of each application 501 in the computing cluster 500.

The storage cluster 700 may include a plurality of servers (which are also referred to as computing nodes), each server is configured to store the service data of the application 501, and the application 501 may read the service data from the storage cluster 700.

In addition, the computing cluster 500, the service network 600, and the storage cluster 700 may be interconnected to form a topology structure, so that nodes in the data center cluster can have a topology relationship.

The general-purpose server cluster 800 may be separately connected to the computing cluster 500, the service network 600, and the storage cluster 700. The general-purpose server cluster 800 may be configured to control the computing cluster 500, the service network 600, and the storage cluster 700.

The general-purpose server cluster 800 may include a job scheduler 300 and a network controller 400. The service execution system in this application mentioned above may include the job scheduler 300 and the network controller 400 herein.

The job scheduler 300 and the network controller 400 may be implemented as control software, and the job scheduler 300 and the network controller 400 may be installed in a same server or different servers in the general-purpose server cluster 800. This is not limited herein.

The job scheduler 300 may be configured to: schedule a job of an application in the data center cluster, for example, may receive a service request (which may be considered as a job) of the application 501, schedule the job, and allocate a computing resource (for example, a computing node or a CPU in the computing node) in the computing cluster 500 to the job, to generate job scheduling information. The job scheduling information may include a computing resource used to execute a to-be-executed job, that is, a computing resource allocated by the job scheduler 300 to the to-be-executed job.

The computing resource in the job scheduling information may indicate one computing node in the computing cluster 500, indicate a plurality of computing nodes, or indicate at least one CPU in one or more computing nodes. In this case, a minimum unit of the computing resource may be a single computing node, may be a plurality of computing nodes, may be one CPU, or may be a plurality of CPUs. During specific application, minimum units of computing resources allocated by different job schedulers 300 to the to-be-executed job may be differentiated. In this embodiment, the computing resource allocated by the job scheduler 300 to the to-be-executed job may be a computing resource in any type of unit in the foregoing example. This is not limited in this application.

The job scheduler 300 may be communicatively connected to the network controller 400, for example, through a remote procedure call (remote procedure call, RPC) interface. A communication interface between the job scheduler 300 and the network controller 400 is not limited in this application.

The job scheduler 300 in this application may not only schedule the job, but also send the job scheduling information to the network controller 400. The job scheduler 300 may further deliver a scheduled to-be-executed job to a corresponding allocated computing node in the computing cluster 500 for service execution.

The network controller 400 may not only perform management such as topology, route, and fault management on each node in the data center cluster, but also change, based on the job scheduling information from the job scheduler 300, a power state of a switch that needs to be used for a currently scheduled to-be-executed job in the service network 600 and a power state of a port of the switch, so that a switch and a port of the switch whose power states are changed can meet a service execution requirement of the to-be-executed job. After the power state of the switch that needs to be used for the job and the power state of the port of the switch meet the service execution requirement, the network controller 400 may notify the job scheduler 300 to enable the job scheduler 300 to deliver the to-be-executed job to an allocated computing node in the computing cluster 500 to initiate execution of the job.

In addition, the network controller 400 may further determine, based on job scheduling information received for a plurality of times, which switches and ports of the switches in the service network 600 do not forward data for a long time or have low data forwarding frequencies, to perform rate reduction or power-off processing on a corresponding switch and a port of the switch.

A difficulty in dynamically controlling network energy consumption of the data center cluster is that it fails to determine and predict whether a computing node connected to each port of a switch sends data to the switch for communication at a next moment. To resolve this problem, the switch needs to be enabled to determine a service state of the switch at the next moment in advance. In the data center cluster, delivery and execution of a service are managed by the job scheduler 300 in a unified manner. In this case, an execution sequence and an execution occasion of the service may be determined by using the job scheduler 300. The network controller 400 may determine, based on the job scheduling information from the job scheduler 300, which switches do not need to perform service data forwarding at the next moment and which switches need to perform service data forwarding at the next moment. In this way, a power state of a corresponding switch can be dynamically controlled with reference to service-related information, to optimize energy consumption of the switch and further reduce power consumption of the data center cluster.

It should be understood that functions and implementations of the general-purpose server cluster 800, the computing cluster 500, the service network 600, and the storage cluster 700 are not limited to the foregoing examples in this application. Nodes in the data center cluster may further have more functions. This is not limited herein.

It should be understood that the cluster shown in FIG. 2a is merely an example. The data center cluster in this application, and each cluster and network in the data center cluster may have more or fewer modules than those shown in the figure, may combine two or more modules, or may have different module configurations. Modules shown in FIG. 2a may be implemented in hardware that includes one or more signal processing and/or application-specific integrated circuits, software, or a combination of hardware and software.

Before power control processes of the job scheduler 300 and the network controller 400 shown in FIG. 2a are described, an initialization process of the data center cluster and a working principle and a power state of a switch are first briefly described.

In one aspect, in the initialization process of the data center cluster shown in FIG. 2a, the network controller 400 may obtain network topology information.

The network topology information may include a topology relationship.

The topology relationship may include a connection relationship between computing nodes that are in the computing cluster 500 and that are connected by using a service network. For example, the topology relationship may include a connection relationship between the computing cluster 500 and the service network 600 in the data center cluster shown in FIG. 2a. The topology relationship may include a connection relationship between ports of different switches in the service network 600, a connection relationship between each port of each switch in the service network 600 and each computing node in the computing cluster 500, and the like.

When physical connection relationships of nodes in the computing cluster 500, the service network 600, and the storage cluster 700 in the data center cluster shown in FIG. 2a do not change, the topology relationship in the network topology information does not change.

In addition, the network topology information may further include topology state information.

The topology state information may include a link state (a connected state or a disconnected state) of each connection relationship in the foregoing topology relationship, and a link rate of each port of each switch in the topology relationship.

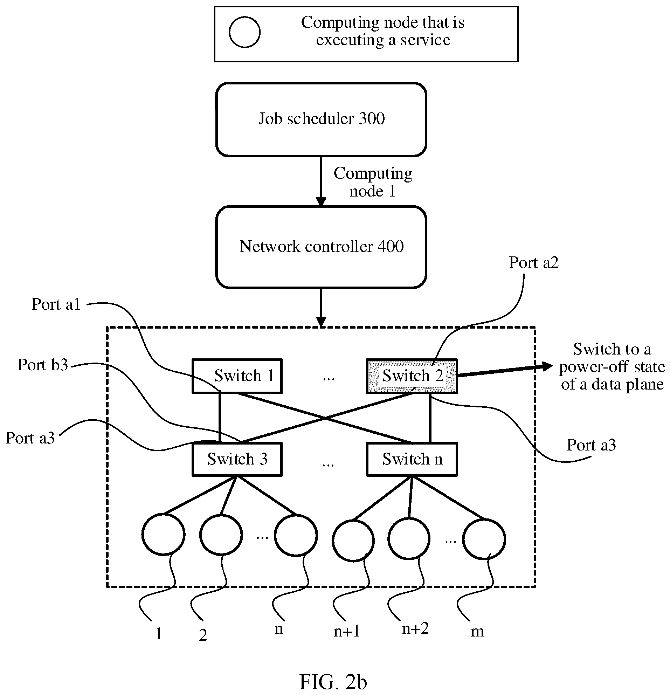

For example, in FIG. 2b, a switch 3 is separately connected to a switch 1 and a switch 2.

For example, a port a3 of the switch 3 is connected to a port a1 of the switch 1, and a port b3 of the switch 3 is connected to a port b2 of the switch 2.

For example, if all ports of the switch 2 are powered off, a port a2 of the switch 2 is in a power-off state, and a link state corresponding to a connection between the switch 3 and the switch 2 is the disconnected state.

For example, if both the port a3 of the switch 3 and the port a1 of the switch 1 are in a power-on state, a link state corresponding to a connection between the switch 3 and the switch 1 is the connected state.

Therefore, power-on/off of a port or a node (a switch or a server) corresponding to each connection relationship in the topology relationship may change a link state of the connection relationship.

When a link state of a connection relationship between two nodes is the disconnected state, the two nodes cannot exchange data. When a link state of a connection relationship between two nodes is the connected state, the two nodes may exchange data, but whether the two nodes exchange data may be determined based on a service and a routing table of a switch.

In another aspect, in the initialization process of the data center cluster shown in FIG. 2a, the network controller 400 may further calculate a routing table of each switch in the service network 600 in the data center cluster based on the obtained network topology information, and deliver the routing table to a corresponding switch in the service network 600.

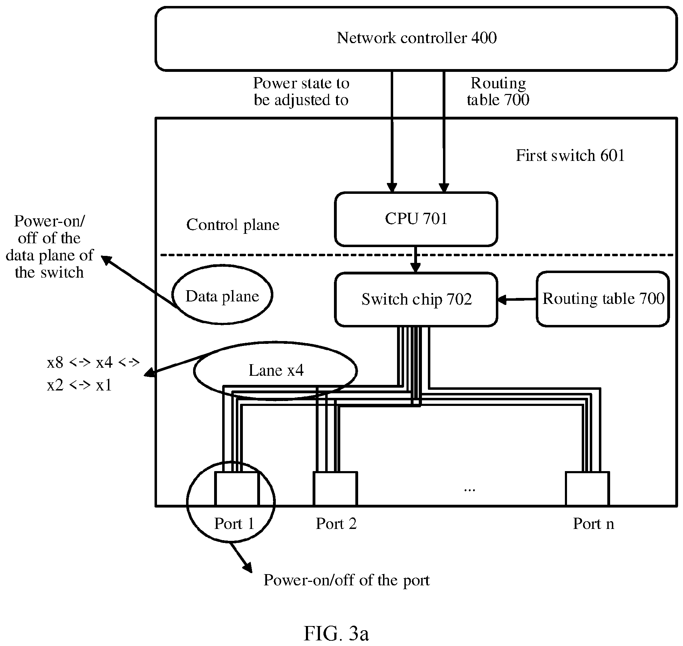

For example, FIG. 3a shows an example of a structure of a switch. For example, the service network 600 in the data center cluster shown in FIG. 2a includes the switch 601 shown in FIG. 3a. In FIG. 3a, the switch 601 is used as an example to describe the structure of the switch and a power control process. When a switch whose power state is regulated is another switch in the service network 600, the method is similar. Details are not described herein again.

As shown in FIG. 3a, the switch 601 may include a CPU 701, a switch chip 702, and n physical ports (where a port 1 to a port n are shown), where n may be any positive integer. This is not limited herein.

In the initialization process of the data center cluster shown in FIG. 2a, the network controller 400 may deliver, to the switch 601, a routing table, for example, a routing table 700, that is about the switch 601 and that is calculated based on the network topology information.

As shown in FIG. 3a, a CPU above a dashed line in the switch 601 belongs to a control plane of the switch 601, and hardware (for example, the switch chip 701, the port 1 to the port n, and a physical connection line between the switch chip 701 and each port) below the dashed line in the switch 601 belongs to a data plane of the switch 601.

The CPU 701 in the switch 601 may control a power state of the switch 601, and may further control the switch chip 702, and configure, in the switch chip 702, the routing table 700 delivered by the network controller 400.

The switch chip 702 may perform data forwarding based on the routing table 700 delivered by the network controller 400.

The routing table 700 of the switch 601 may include information indicating a physical port from which the switch 601 sends data when the data is forwarded by using the switch 601 from a sending end to a destination end. In this way, the switch 601 may implement the data forwarding by using the routing table 700.

For example, the switch 601 may query the routing table 700 based on received information indicating a sending end A and a destination end B, to determine a physical port that is of the switch 601 and from which the data needs to be sent.

It should be understood that for a detailed process of an initialization process of the switch 601, refer to any implementation in a related technology. This is not limited in this application.

In still another aspect, in the initialization process of the data center cluster shown in FIG. 2a, each switch in the service network 600 may report a current power state of each switch to the network controller 400. In this way, the network controller 400 may obtain the current power state of each switch in the data center cluster during initialization of the data center cluster, and store the current power state.

For example, the current power state may be stored in a topology state.

Table 1 shows an example of a power type and a power state of a switch in this application.

**Table 1**

| Power type | Power state |
|---|---|
| Link rate of a port | x1, x2, x4, or x8 |
| Port | Power-on state (port up) or power-off state (port down) |
| Data plane of the switch | Power-on state (power on) or power-off state (power off) |

The following explains the power state shown in Table 1 with reference to FIG. 3a.
1. The power state of the data plane of the switch may include the power-on state or the power-off state.

That the data plane of the switch is in the power-on state indicates that the switch chip 702 of the switch 601 and a circuit that needs to be used when the interaction chip 702 is run are both in the power-on state.

That the data plane of the switch is in the power-off state indicates that hardware on the data plane of the switch 601 is in the power-off state. The hardware herein may include the switch chip 702 and the port 1 to the port n shown in FIG. 3a.

2. The power state of the port of the switch may include the power-on state or the power-off state.

For example, in FIG. 3a, the switch 601 includes the n physical ports, which are respectively the port 1 to the port n. Any one of the n physical ports may be in the power-on state or the power-off state.

3. The port of the switch is in power states of different link rates.

As shown in Table 1, that the link rate of the port is x1 may indicate that the port of the switch enables one lane (lane); that the link rate of the port is x2 may indicate that the port of the switch enables two lanes; that the link rate of the port is x4 may indicate that the port of the switch enables four lanes; or that the link rate of the port is x8 may indicate that the port of the switch enables eight lanes.

For example, in FIG. 3a, the port 1 of the switch 601 enables four lanes, and four connection lines between the switch chip 702 and the port 1 indicate that the port 1 enables four lanes. A quantity of lanes enabled by the port 1 may be changed between 1, 2, 4, and 8.

A quantity of lanes enabled by a physical port of the switch may affect a link rate and a bandwidth of the physical port. A larger quantity of enabled lanes indicates a higher link rate and a wider bandwidth of the switch.

It should be understood that a quantity of lanes that can be enabled by the physical port of the switch is not limited in this application. A maximum quantity of enabled lanes is not limited to 8, and may be larger.

Optionally, in the initialization process of the data center cluster shown in FIG. 2a, when each switch in the service network 600 is initialized, the network controller 400 may further control a power state of each switch to a maximum energy consumption state. For example, the data plane is in the power-on state, all ports are in the power-on state, and link rates of all ports are highest link rates (for example, x8).

After initialization of the data center cluster shown in FIG. 2a is completed, in a running process of the data center cluster, the service execution system in this application may perform dynamic power control on a switch in the data center cluster with reference to a service. The following describes a power-off control process and a power-on control process of the switch by using Example 1 and Example 2 respectively.

### Example 1

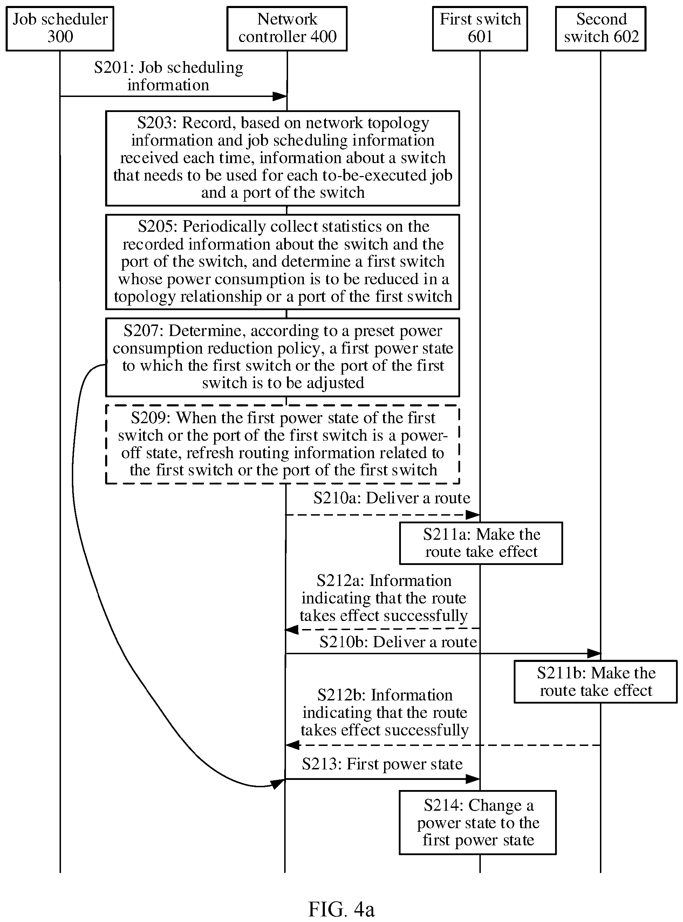

FIG. 4a shows an example of a time sequence diagram of controlling a power state of a switch by a service execution system according to this application.

FIG. 4a shows an example of a first switch 601 and a fourth switch 604 in the service network 600 in FIG. 2a. There may be one or more first switches 601 and fourth switches 604. This is not limited herein.

As shown in FIG. 4a, a process may include the following steps.

S201: A job scheduler 300 sends job scheduling information to a network controller 400.

Refer to FIG. 2a. The job scheduler 300 may receive a service request (for example, a to-be-executed target job) from an application 501, and allocate an idle computing node (for example, the computing node 1 shown in FIG. 2b) in a computing cluster 500 to the to-be-executed target job to run the target job.

In some embodiments, the computing node allocated to the target job may alternatively be a non-idle computing node. For example, the computing node is executing a service. A running state of the computing node allocated by the job scheduler 300 to the target job is not limited in this application.

The job scheduling information may include information about the computing node allocated by the job scheduler 300 to the to-be-executed target job.

Each time the job scheduler 300 schedules one to-be-executed target job, before the target job starts to be executed, the job scheduler 300 may send job scheduling information of the target job to the network controller 400. Therefore, in a running process of a data center cluster, S201 may be performed for a plurality of times, so that the network controller 400 can receive the job scheduling information for a plurality of times.

S203: The network controller 400 records, based on network topology information and job scheduling information received each time, information about a switch that needs to be used for each to-be-executed job and a port of the switch.

The network controller 400 may store network topology information of the data center cluster. The network topology information may include a connection relationship between a computing node and a port of a switch and a connection relationship between ports of different switches in a topology relationship. For specific content of the network topology information, refer to related descriptions of the foregoing initialization process of the data center cluster. Details are not described herein again.

In this case, each time the network controller 400 receives the job scheduling information, the network controller 400 may obtain a topology relationship once, and may determine, based on the topology relationship, a computing node that needs to be used for a currently scheduled target job in the job scheduling information.

The network controller 400 may determine, based on a connection relationship between ports of nodes in the topology relationship, switches that are directly and indirectly connected to a target computing node and ports of the switches. These switches and the ports of the switches are switches that need to be used for the currently scheduled target job and ports of the switches.

Each time the network controller 400 receives the job scheduling information, the network controller 400 may record once information about the switch that needs to be used for the currently scheduled target job and information about the port of the switch.

S205: The network controller 400 periodically collects statistics on the recorded information about the switch and the port of the switch, and determines a first switch whose power consumption is to be reduced in the topology relationship or a port of the first switch.

The network controller 400 may periodically collect statistics on the information that is about the switch that needs to be used for each scheduled job and the port of the switch and that is recorded in S203, to determine (one or more) ports of which switch or switches in the foregoing topology relationship are not used for a job for more than a preset period of time (for example, 5 minutes, which is not specifically limited, and may be configured based on a requirement), and/or determine a use frequency of (one or more) ports of which switch or switches in the foregoing topology relationship is lower than a preset threshold. In this case, herein, determined at least one port of a switch that is not used for more than a specific period of time and/or that has a low use frequency may be at least one port of the first switch 601 whose power consumption needs to be reduced.

A quantity of first switches 601 is not limited in this application.

S207: The network controller 400 determines, according to a preset power consumption reduction policy, a first power state to which the first switch 601 or the port of the first switch 601 is to be adjusted.

As described in the initialization process of the data center cluster, the network controller 400 may store current power states of each switch and a port of the switch in the service network 600. In the running process of the data center cluster, if the power state of the switch or the port of the switch is changed through an active operation of the network controller 400, the network controller 400 may update the stored power state, and when the switch or the port of the switch in the service network 600 is powered off due to a hardware fault or the like, the network controller 400 may also receive a power state that is changed due to the fault. Therefore, a network controller 400 side may store the current power states of each switch and the port of the switch in the service network 600.

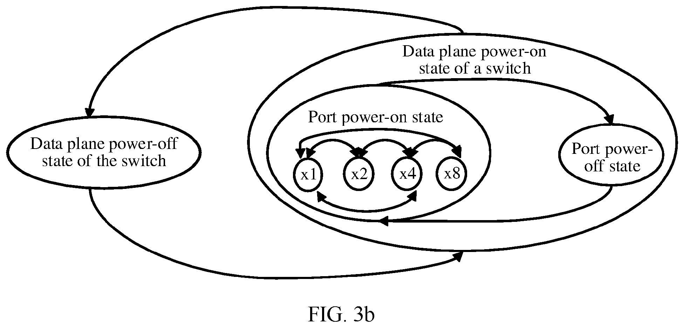

FIG. 3b shows an example of a diagram of a conversion relationship between different power states of a switch.

In FIG. 3b, an arrow indicates that the switch may be converted from a power state corresponding to a start end of the arrow to a power state corresponding to a destination end of the arrow.

In this embodiment of this application, the preset power consumption reduction policy according to which the network controller 400 adjusts the power state of the switch may comply with the conversion relationship shown in FIG. 3b.

In this step, the network controller 400 may determine, based on a current power state of the first switch or the port of the first switch and according to the preset power consumption reduction policy, the first power state to which the first switch or the port of the first switch is to be adjusted.

With reference to FIG. 3a and FIG. 3b, the following describes a process in which a network controller adjusts a power of a switch in this embodiment.

In a possible implementation, the network controller 400 determines, in S205, that a port 1 of the first switch 601 is not used for more than 5 minutes, and the network controller 400 determines that a current link rate of the port 1 is x4, which is not a lowest link rate (for example, x1). In this case, the network controller 400 may control the first switch 601 to reduce the rate of the port 1, for example, reduce the link rate of the port 1 from x4 to x2 (or x1). Herein, the first power state to which the first switch 601 is to be adjusted is that the link rate of the port 1 is x2 (or x1).

In a possible implementation, as shown in FIG. 3b, when a port is in a power-on state and a link rate is not a lowest link rate, the network controller 400 may control the link rate of the port to decrease step by step, for example, from x8 to x4, from x4 to x2, or from x2 to x1.

In a possible implementation, the network controller 400 determines, in S205, that a port 1 of the first switch 601 is not used for more than 5 minutes, and the network controller 400 determines that a current link rate of the port 1 is x1, which is a lowest link rate. In this case, the network controller 400 may control the first switch 601 to power off the port 1, so that the port 1 of the first switch 601 is to be adjusted to a power-off state (which is an example of the first power state herein).

In a possible implementation, the network controller 400 determines, in S205, that none of a port 1 to a port n of the first switch 601 is used for more than 5 minutes, and determines that current power states of the port 1 to the port n are all power-off states. In other words, all the ports of the first switch 601 are currently in the power-off state. Optionally, the network controller 400 further determines that all the ports of the first switch 601 are powered off for more than one hour (where a specific period of time is configurable, and is not limited herein). When a data plane (for example, a switch chip 702 on the data plane) of the first switch 601 is in the power-on state, the network controller 400 may control all hardware (for example, the switch chip 702 and a circuit that controls running of the switch chip 702) on the data plane of the first switch 601 to be powered off, so that the data plane of the first switch 601 is in the power-off state.

For example, FIG. 2b shows an example of a diagram of power regulation.

With reference to FIG. 2a, as shown in FIG. 2b, the service network 600 may include n switches, which are respectively a switch 1 to a switch n. A computing cluster may include m computing nodes, which are respectively a computing node 1 to a computing node m. Connection lines between the n switches and the m computing nodes indicate a topology relationship formed by the switches and the computing nodes. In a scenario shown in FIG. 2b, the m computing nodes are executing a service.

As shown in FIG. 2b, the job scheduler 300 may allocate, to a scheduled job, a computing node, which is the computing node 1 herein. The job scheduler 300 may include information about the computing node allocated to the job in job scheduling information, and send the job scheduling information to the network controller 400. Certainly, in some embodiments, the job scheduler 300 may alternatively directly send, to the network controller 400, the information about the computing node allocated to the job.

In the example of FIG. 2b, the job scheduler 300 may send, to the network controller 400 each time, the information about the computing node (where the computing node 1 shown) allocated to the scheduled job. The network controller 400 periodically collects statistics on a switch that needs to be used for each scheduled job and a port of the switch, and determines that both a port a2 and a port a3 of the switch 2 are powered off for more than 5 minutes. For example, the switch 2 has only the foregoing two ports. In addition, if a data plane of the switch 2 is in the power-on state, the network controller 400 may control the data plane of the switch 2 to be powered off, so that both a switch chip on the data plane of the switch 2 and a circuit that controls running of the switch chip are changed to be in the power-off state.

In this embodiment of this application, the network controller 400 not only can control hardware on a data plane of a switch to be in the power-on/off state, but also can control a power-on/off state of each port of the switch when the data plane is in the power-on state, and perform power control at different link rates on the port when the port of the switch is in the power-on state. In this way, refined control on a power state of the switch can be performed, to implement dynamic energy consumption management on a network in the data center cluster with reference to a service.

In a possible implementation, when the network controller 400 adjusts the power state of the switch, if only adjustment of a link rate of a port is involved, and power-on/off adjustment of the port or the data plane is not involved, after S207, the process may go to S213 and S214.

Optionally, in S209, when the first power state of the first switch or the port of the first switch is the power-off state, the network controller 400 refreshes routing information related to the first switch or the port of the first switch.

In this embodiment, when adjusting the power state of the first switch 601, the network controller 400 needs to control the data plane of the first switch 601 to be powered off or control the at least one port of the first switch 601 to be powered off. Therefore, in a scenario in which any switch or a port of the switch in the service network 600 shown in FIG. 2b needs to be switched from the power-on state to the power-off state, to ensure correct forwarding of service data of a switch (which is the fourth switch 604 herein) related to the switch (which is the first switch 601 herein) and a to-be-powered-off port of the switch in the topology relationship, before the first switch 601 or the port of the first switch 601 is powered off, the network controller 400 may refresh routing information related to the first switch 601 or a to-be-powered-off port of the first switch 601.

The network controller 400 may store routing information of each switch in the service network 600.

When refreshing the stored routing information, the network controller 400 may first update topology state information in the network topology information based on the first switch 601 or the to-be-powered-off port of the first switch 601. As described above, the topology state information includes whether a link corresponding to a connection relationship of each node is in a connected state or a disconnected state. In this embodiment, the network controller 400 may refresh, to the disconnected state, a state of a link corresponding to a connection relationship related to the first switch 601 or the to-be-powered-off port of the first switch 601.

After refreshing the topology state information, the network controller 400 may refresh, based on a change of the topology state information, the routing information related to the first switch 601 or the to-be-powered-off port of the first switch 601 in the topology relationship.

In a possible implementation, some ports of the first switch 601 need to be powered off this time. In this case, switches that refresh routes this time may include the first switch 601 and the fourth switch 604 related to the to-be-powered-off port of the first switch 601.

In a possible implementation, all the ports of the first switch 601 need to be powered off this time. In this case, a switch that refreshes a route this time may include the fourth switch 604 related to the to-be-powered-off port of the first switch 601.

Optionally, in S210a, the network controller 400 delivers a refreshed routing table of the first switch 601 to the first switch 601.

S210b: The network controller 400 delivers a refreshed routing table of the fourth switch 604 to the fourth switch 604.

S211a: The first switch 601 makes the re-received routing table configuration take effect.

For example, in FIG. 3a, the CPU 701 of the switch 601 may configure the received routing table 700 in the switch chip 702.

S211b: The fourth switch 604 makes the re-received routing table configuration take effect.

Optionally, in S212a, the first switch 601 sends, to the network controller 400, information indicating that the route takes effect successfully.

For example, in FIG. 3a, after the CPU 701 of the switch 601 configures the received routing table 700 in the switch chip 702, the first switch 601 may send, to the network controller 400, information indicating that the route takes effect successfully.

Optionally, in S212b, the fourth switch 604 sends, to the network controller 400, the information indicating that the route takes effect successfully.

An execution sequence of S210a and S210b is not limited, an execution sequence of S211a and S211b is not limited, and an execution sequence of S212a and S212b is not limited in this application.

After S212a and S212b, the process may go to S213.

S213: The network controller 400 sends, to the first switch 601, the first power state to which the first switch 601 is to be adjusted.

For example, the first power state may be the power-off state of the data plane of the switch, or may be a power-off state of at least one port of the switch, or may be a link rate to which the at least one port of the switch is to be adjusted.

For example, in FIG. 3a, the network controller 400 may send, to the first switch 601, a power state to be adjusted to.

S214: The first switch 601 changes the power state to the first power state.

For example, in FIG. 3a, the CPU 701 of the first switch 601 may perform a power-off operation on hardware (for example, the switch chip 702 and the circuit that controls the running of the switch chip 702) on the data plane of the first switch 601 based on the received power state to be adjusted to, the CPU 701 performs the power-off operation on a specified port of the first switch 601, or the CPU 701 switches on or off a corresponding quantity of lanes (lanes) for a specified port of the first switch 601, to change a link rate of the port, to implement multi-level power control on the switch.

In the process in FIG. 4a, when the first power state is the data plane power-off state of the first switch 601 or a port power-off state of the at least one port of the first switch 601, the network controller 400 may first refresh, based on a time sequence shown in FIG. 4a, a routing table of a switch that is in the topology relationship and that is related to the to-be-powered-off port or the first switch, and after route refreshing is completed, the network controller 400 controls the first switch to power off hardware on the data plane and/or the at least one port based on the first power state, so that a case in which a service being executed by a second switch that is related to the port that is powered off is interrupted because the hardware on the data plane or the port of the first switch is powered off can be avoided, and energy consumption of the switch can be dynamically reduced without affecting normal service execution.

In this embodiment, the network controller 400 may receive the job scheduling information sent by the job scheduler 300 for a plurality of times, record, based on the topology relationship, the information about the switch that needs to be used for the scheduled job each time and the information about the port of the switch, and periodically collect statistics on the recorded information about the switch and the port of the switch, to determine which switches or ports of the switches in the topology relationship do not forward service data for a long time or have low data forwarding frequencies, to perform rate reduction, port power-off processing, or data plane power-off processing on corresponding switches and ports of the switches.

### Example 2

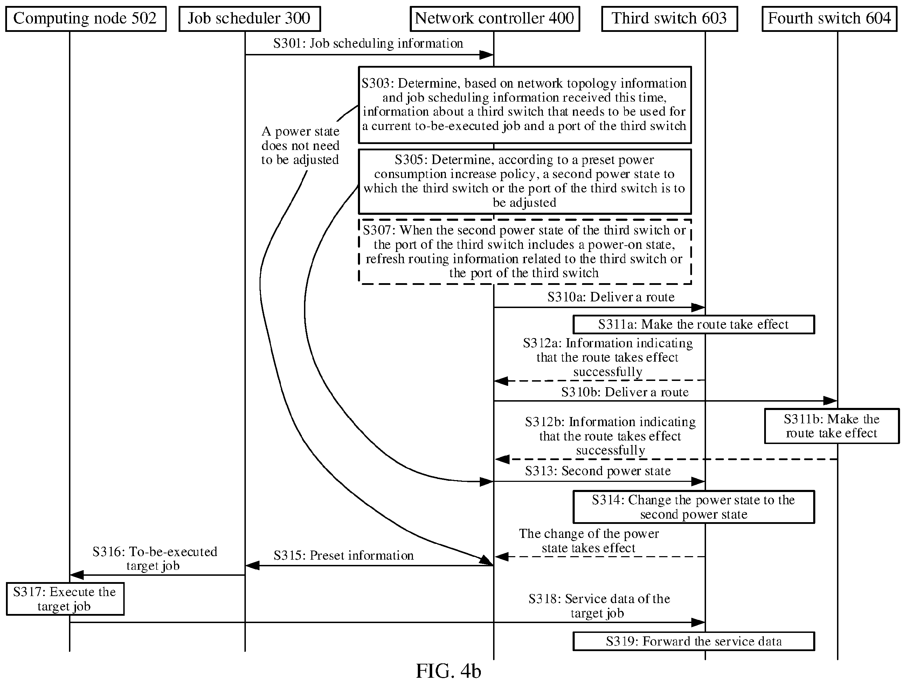

FIG. 4b shows an example of a time sequence diagram of controlling a power state of a switch by a service execution system according to this application.

FIG. 4b shows an example of a third switch 603 and a fourth switch 604 in the service network 600 in FIG. 2a. There may be one or more third switches 603 and fourth switches 604. This is not limited herein.

As shown in FIG. 4b, a process may include the following steps.

S301: A job scheduler 300 sends job scheduling information to a network controller 400.

Refer to FIG. 2a. The job scheduler 300 may receive a service request (for example, a to-be-executed target job) from an application 501, and allocate an idle computing node (for example, the computing node 502 shown in FIG. 3b) in a computing cluster 500 to the to-be-executed target job to run the target job.

In some embodiments, the computing node allocated to the target job may alternatively be a non-idle computing node. For example, the computing node is executing a service. A running state of the computing node allocated by the job scheduler 300 to the target job is not limited in this application.

The job scheduling information may include information about the computing node 502 allocated by the job scheduler 300 to the to-be-executed target job.

Each time the job scheduler 300 schedules one to-be-executed target job, before the target job starts to be executed, the job scheduler 300 may send job scheduling information of the target job to the network controller 400.

S303: The network controller 400 determines, based on network topology information and job scheduling information received this time, information about a third switch that needs to be used for a current to-be-executed job and a port of the third switch.

The network controller 400 may store network topology information of a data center cluster. The network topology information may include a connection relationship between a computing node and a port of a switch and a connection relationship between ports of different switches in the topology relationship. For specific content of the network topology information, refer to related descriptions of the foregoing initialization process of the data center cluster. Details are not described herein again.

In this case, after receiving the job scheduling information once, the network controller 400 may obtain a topology relationship once, and may determine, based on the topology relationship, a computing node that needs to be used for a currently scheduled target job in the job scheduling information.

The network controller 400 may determine, based on a connection relationship between ports of nodes in the topology relationship, switches that are directly and indirectly connected to a target computing node and ports of the switches. In this case, these switches and the ports of the switches are third switches 603 that need to be used for the currently scheduled target job and ports of the third switches 603.

As described in the initialization process of the data center cluster, the network controller 400 may store current power states of each switch and a port of the switch in the service network 600. In a running process of the data center cluster, if a power state of a switch or a port of the switch is changed through an active operation of the network controller 400, the network controller 400 may update the stored power state, and when the switch or the port of the switch in the service network 600 is powered on due to a hardware fault or the like, the network controller 400 may also receive a power state that is changed due to the fault. Therefore, a network controller 400 side may store the current power states of each switch and the port of the switch in the service network 600.

In some embodiments, if a current power state of the third switch 603 that needs to be used for the current target job and a current power state of a specific port of the third switch 603 that needs to be used are available states, it indicates that the current power state can meet a service execution requirement, and the network controller 400 may not control or adjust the power states of the third switch 603 and the port of the third switch 603. Therefore, after S303, the process goes to S315.

That the power state is the available state may indicate that the power state can meet the service execution requirement.

That the power state is an unavailable state may indicate that the power state cannot meet the service execution requirement.

S305: The network controller 400 determines, according to a preset power consumption increase policy, a second power state to which the third switch 603 or the port of the third switch 603 is to be adjusted.

Similar to Example 1, in this embodiment of this application, the preset power consumption increase policy according to which the network controller 400 adjusts the power state of the switch may also comply with the conversion relationship shown in FIG. 3b.

In this step, the network controller 400 may determine, based on the current power state of the third switch 603 or the port of the third switch 603 and according to the preset power consumption increase policy, the second power state to which the third switch 603 that needs to be used for the current job or the port of the third switch that needs to be used needs to be adjusted.

With reference to FIG. 3a and FIG. 3b, the following describes a process in which a network controller adjusts a power of a switch in this embodiment. For example, the first switch 601 shown in FIG. 3a and the third switch 603 described in this embodiment are a same switch. In other words, after the first switch 601 that is not used for a long time or the port of the first switch 601 is powered off through Example 1, the to-be-executed target job scheduled by the job scheduler 300 in Example 2 needs to forward data by using the first switch 601.

In a possible implementation, as shown in FIG. 3a and FIG. 3b, the network controller 400 determines that a current power state of the first switch 601 that needs to be used for the current target job is a data plane power-off state. For example, if all hardware such as the switch chip 702 and the n ports on a data plane of the first switch 601 is in a power-off state, the network controller 400 may control the first switch 601 to power on the data plane, and specifically, may control the first switch 601 to power on the switch chip 702 and a circuit configured to control running of the switch chip 702, so that the power state of the first switch 601 can be adjusted to a data plane power-on state.

In a possible implementation, as shown in FIG. 3a and FIG. 3b, when the first switch 601 that needs to be used for the current target job is in a data plane power-on state, and a port 1 that is of the first switch 601 and that needs to be used for the current target job is in a power-off state, the network controller 400 may control the port 1 of the first switch 601 to be powered on, so that the port 1 is in a power-on state.

In a possible implementation, as shown in FIG. 3a and FIG. 3b, when the first switch 601 that needs to be used for the current target job is in a data plane power-on state, and a port 1 that needs to be used is also in the power-on state, the network controller 400 may flexibly adjust a link rate of the port 1 with reference to a service execution requirement (for example, a bandwidth requirement) of the target job and/or the preset power consumption increase policy. For example, the link rate of the port 1 may be converted between any two rates of x1, x2, x4, and x8 shown in FIG. 3b.

For example, when the first switch 601 that needs to be used for the current target job is in the data plane power-on state, and the port 1 that needs to be used is also in the power-on state, the network controller 400 may set the link rate of the port 1 to a highest link rate, which is x8 herein, with reference to the preset power consumption increase policy, to ensure highly reliable execution of a service.

For example, when the first switch 601 that needs to be used for the current target job is in the data plane power-on state, and the port 1 that needs to be used is also in the power-on state, the network controller 400 may set the link rate of the port 1 to a non-highest link rate such as x1, x2, or x4 with reference to the service execution requirement (for example, a low bandwidth requirement) of the target job.

An implementation principle of adjusting, by the switch, the power state of the data plane or the port of the switch based on the second power state that is provided by the network controller 400 and that is to be adjusted to is similar to the related descriptions of FIG. 3a in Example 1, and details are not described herein again.

In this embodiment, each time the network controller 400 receives one piece of job scheduling information, the network controller 400 needs to ensure that a power state of a switch that needs to be used for a scheduled target job or a power state of a port of the switch is the available state, and when the power state is the available state, the network controller 400 notifies the job scheduler 300 to start an execution procedure of the target job, to ensure that after the target job is executed by the computing node 502, the third switch 603 that needs to be used for the target job can forward service data of the target job.

That the power state of the switch or the port of the switch is the available state may indicate that the power state can meet the service execution requirement.

That the power state of the switch or the port of the switch is the unavailable state may indicate that the power state cannot meet the service execution requirement.

If determining that the power state of the third switch 603 or the port of the third switch 603 meets the service execution requirement, the network controller 400 does not need to adjust the power state of the third switch 603 or the port of the third switch 603.

If the network controller 400 determines that the power state of the third switch 603 or the port of the third switch 603 does not meet the service execution requirement (for example, the data plane is in the power-off state, the port that needs to be used is in the power-off state, or the link rate of the port cannot meet the service execution requirement), the network controller 400 needs to adjust the power state of the corresponding third switch 603 or the port of the third switch 603 to the available state, to ensure reliable execution of the service.

Power states that meet the service execution requirement may be differentiated according to different preset power consumption increase policies. For example, the target job needs to forward the data through the port 1 of the first switch 601 shown in FIG. 3a. According to a policy 1, it only needs to be ensured that a power state of the port 1 is the power-on state, so that the service execution requirement can be met. Therefore, according to the policy 1, it only needs to be ensured that before the target job is executed, the network controller 400 controls and adjusts the power state of the port 1 to the power-on state, so that the power state is the available state. On the contrary, if the power state of the port 1 is the power-off state, the port 1 that is powered off cannot forward the service. Therefore, the power state of the port 1 is the unavailable state, and the network controller 400 needs to control the port 1 to be powered on, to adjust the power state of the port 1 to the available state.

For another example, according to a policy 2, for the target job, the power state of the port 1 shown in FIG. 3a needs to be the power-on state, and the link rate of the port 1 also needs to be the highest link rate (for example, x8), so that the power state of the port 1 can meet the service execution requirement. For example, if the first switch 601 is in the data plane power-on state, but a current power state of the port 1 is the power-off state, the network controller 400 needs to control the port 1 of the first switch 601 to be powered on and control the link rate to be set to x8. For another example, if the first switch 601 is in the data plane power-on state, and the port 1 is in the power-on state, but the current link rate of the port 1 is not the highest link rate, the network controller 400 needs to control the link rate of the port 1 of the first switch 601 to be set to x8, so that the power state of the port 1 is the available state.

In this embodiment of this application, the network controller 400 not only can control hardware on a data plane of a switch to be in the power-on/off state, but also can control a power-on/off state of each port of the switch when the data plane is in the power-on state, and perform power control at different link rates on the port when the port of the switch is in the power-on state. In this way, refined control on a power state of the switch can be performed, to implement dynamic energy consumption management on a network in the data center cluster with reference to a service.

In a possible implementation, when the network controller 400 adjusts the power state of the switch, if only adjustment of a link rate of a port is involved, and a power-on operation of the port or the data plane is not involved, after S305, the process may go to S313.

Optionally, in S307, when the second power state of the third switch 603 or the port of the third switch 603 includes the power-on state, the network controller 400 refreshes routing information related to the third switch 603 or the port of the third switch 603.

In this embodiment, when adjusting the power state of the third switch 603, the network controller 400 needs to control the data plane of the third switch 603 to be powered on or control at least one port of the third switch 603 to be powered on. In this case, when a power state of any switch or a port of the switch in the service network 600 shown in FIG. 2b needs to be switched from the power-off state to the power-on state, to ensure correct forwarding of service data of a switch (the fourth switch 604 herein) related to the switch (the third switch 603 herein) and a to-be-powered-on port of the switch in the topology relationship, the network controller 400 may refresh routing information related to the third switch 603 or the to-be-powered-on port of the third switch 603.

The network controller 400 may store routing information of each switch in the service network 600.

When refreshing the stored routing information, the network controller 400 may first update topology state information in the network topology information based on the third switch 603 or the to-be-powered-on port of the third switch 603. As described above, the topology state information includes whether a link corresponding to a connection relationship of each node is in a connected state or a disconnected state. In this embodiment, the network controller 400 may refresh, to the connected state, a state of a link corresponding to a connection relationship related to the third switch 603 or the to-be-powered-on port of the third switch 603.

After refreshing the topology state information, the network controller 400 may refresh, based on a change of the topology state information, routing information related to the third switch 603 or the to-be-powered-on port of the third switch 603 in the topology relationship.

In this embodiment, the port and/or the data plane of the third switch 603 need/needs to be powered on this time. In this case, switches that refresh routes this time may include the third switch 603 and a fourth switch 604 related to a powered-on port of the to-be-powered-on third switch 603.

S310a: The network controller 400 delivers a refreshed routing table of the third switch 603 to the third switch 603.

S310b: The network controller 400 delivers a refreshed routing table of the fourth switch 604 to the fourth switch 604.

S311a: The third switch 603 makes the re-received routing table configuration take effect.

S311b: The fourth switch 604 makes the re-received routing table configuration take effect.

Optionally, in S312a, the third switch 603 sends, to the network controller 400, information indicating that the route takes effect successfully.

Optionally, in S312b, the fourth switch 604 sends, to the network controller 400, information indicating that the route takes effect successfully.

An execution sequence of S310a and S310b is not limited, an execution sequence of S311a and S311b is not limited, and an execution sequence of S312a and S312b is not limited in this application.

In addition, implementation principles of S310a, S310b, S311a, S311b, S312a, and S312b are similar to those of corresponding S210a, S210b, S211a, S211b, S212a, and S212b in Example 1. Details are not described herein again.

After S312a and S312b, the process may go to S313.

S313: The network controller 400 sends, to the third switch 603, the second power state to which the third switch 603 is to be adjusted.

For example, the second power state may be the power-on state of the data plane of the switch, a power-on state of at least one port of the switch, and/or a link rate to which the at least one port of the switch is to be adjusted.

S314: The third switch 603 changes the power state to the second power state.

For example, in FIG. 3a, an example in which the third switch 603 and the first switch 601 are a same switch is used for description herein. The CPU 701 may perform a power-on operation on hardware (for example, the switch chip 702 and the circuit that controls running of the switch chip 702) on the data plane of the first switch 601 based on the received power state (which is the second power state herein) to be adjusted to, so that the first switch 601 is in the data plane power-on state; the CPU 701 performs the power-on operation on a specified port of the first switch 601; and/or the CPU 701 switches on/off a corresponding quantity of lanes (lanes) for the specified port of the first switch 601, to change a link rate of the port, to implement multi-level power control on the switch.

Optionally, after changing the power state, the third switch may notify the network controller 400 that the change of the power state takes effect.

After S314, in S315, the network controller 400 sends preset information to the job scheduler 300.

Each time the network controller 400 receives the job scheduling information, regardless of whether a power state of a switch that needs to be used for the currently scheduled target job and a power state of a port of the switch are adjusted, the network controller 400 may return the preset information (for example, ready (ready) information) to the job scheduler 300. In this way, the job scheduler 300 can perform S316 to start execution of the target job. The preset information indicates that the power state of the switch that needs to be used for the currently scheduled target job and the power state of the port of the switch are available states, and the power states may meet a service requirement of the target job. For example, the preset information may be network state information 2 shown in FIG. 3a.

S316: The job scheduler 300 delivers a to-be-executed target job corresponding to the job scheduling information to the allocated computing node 502.

S317: The computing node 501 executes the target job.

S318: The computing node 501 sends, to the third switch 603, service data that needs to be forwarded in a process of executing the target job.

S319: The third switch 603 forwards the service data based on the updated routing table.

In the process in FIG. 4b, when the second power state is the data plane power-on state of the third switch 603 or a port power-on state of the at least one port of the third switch 603, an execution sequence of the route refreshing process from S307 to S312b in FIG. 4b and the process of adjusting the power state corresponding to S313 and S314 in FIG. 4b is not limited in this application.

In this embodiment of this application, each time after scheduling a job, the job scheduler 300 may send job scheduling information of the job to the network controller 400 before delivering the job to an allocated computing node for execution. The network controller 400 may determine, based on the computing node and the topology relationship, a switch that needs to be used for the to-be-executed job and a port of the switch. When current power states of the switch and the port of the switch cannot meet a service execution requirement of the job, the network controller 400 adjusts the power states of the switch and the port of the switch, so that an adjusted power state meets the service execution requirement of the job. When the power state of the switch that needs to be used for the job and the power state of the port of the switch can meet the service execution requirement of the job, the network controller 400 notifies the job scheduler 300 that the job can be executed. Finally, after receiving a notification of the network controller 400, the job scheduler 300 may deliver the to-be-executed job to the allocated computing node for execution, so that service data generated in a job execution process may be reliably forwarded by using the foregoing switch and port.

In this process, before the job is executed, the network controller 400 may adjust, to the available states, the power state of the switch that needs to be used for the job and the power state of the port of the switch, so that the power states can meet the service execution requirement of the job. In this way, a case in which service execution is interrupted because a power state of a switch is adjusted can be avoided, and the power state of the switch can be dynamically adjusted with reference to a service.

It should be understood that, in the foregoing Example 1 and Example 2, the first switch 601 whose power consumption is to be reduced and the port of the first switch 601 may be the same as or different from the third switch 603 whose power consumption is to be increased and the port of the third switch 603. This is not limited herein.

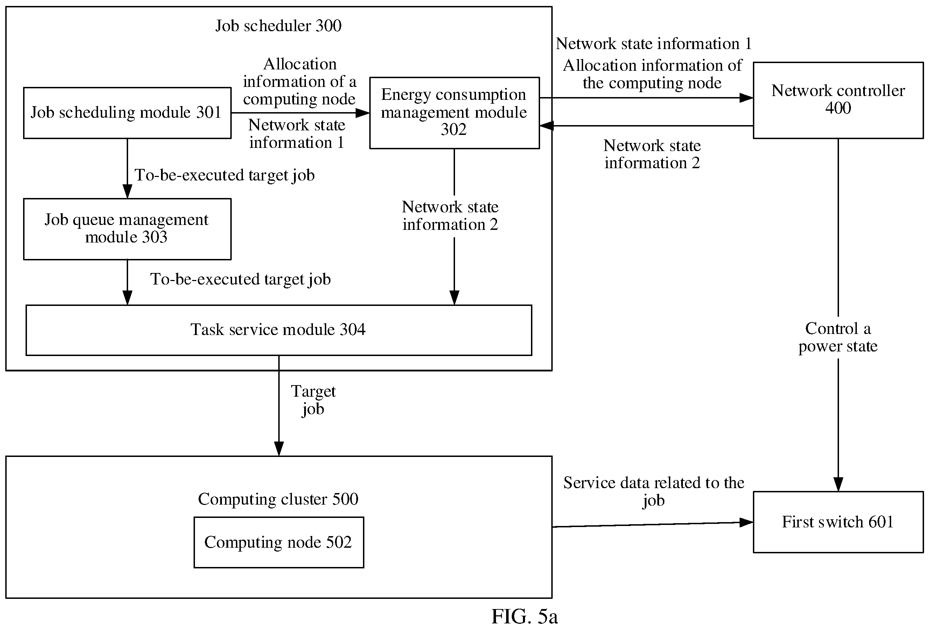

With reference to any one of the foregoing implementations, FIG. 5a shows an example of a diagram of interaction between modules in a job scheduler 300 and another node in a data center cluster.

As shown in FIG. 5a, the job scheduler 300 may include but is not limited to a job scheduling module 301, an energy consumption management module 302, a job queue management module 303, a task service module 304, and the like.

As shown in FIG. 5a, the job scheduling module 301 may receive a service request from an application, and allocate a computing node in a computing cluster 500, for example, the computing node 502 shown in FIG. 4b, to a to-be-executed target job.

As shown in FIG. 5a, the job scheduling module 301 may send the to-be-executed target job to the job queue management module 303, and the job queue management module 303 may send a corresponding to-be-executed target job to the task service module 304 based on a queue sequence to wait for execution.

In some embodiments, the job scheduling module 301 may alternatively send the target job to the job queue management module 303 before allocating the computing node to the target job. This application does not limit an execution sequence of a step of allocating the computing node to the target job and a step of delivering the target job to the task service module 304 by using the job queue management module 303.

As shown in FIG. 5a, after allocating the computing node to the target job, the job scheduling module 301 may further send allocation information of the computing node to the energy consumption management module 302, and send the allocation information of the computing node (for example, the computing node 502) to a network controller 400 by using the energy consumption management module 302.

Each time the network controller 400 receives the allocation information of the computing node, regardless of whether power states of a switch and a port of the switch are adjusted, the network controller 400 may return preset information to the energy consumption management module 302 in the job scheduler 300. The preset information indicates that a power state of a target switch 601 or a port of the target switch 601 is an available state, and the power state may meet a service requirement of the target job. For example, the preset information may be network state information 2 shown in FIG. 5a, for example, a ready state.

That the power state is the available state may indicate that the power state can meet a service execution requirement. For specific explanations of the available state, refer to the foregoing description. Details are not described herein again.

As shown in FIG. 5a, after receiving the preset information (the network state information 2 herein), the energy consumption management module 302 may notify the task service module 304 that the target job can be started for execution, and then the task service module 304 may deliver the target job to the computing node 502 that is already allocated in the computing cluster 500, so that the computing node 502 executes the target job.

In a possible implementation, as shown in FIG. 5a, the job scheduler 300 may further forward notification information (for example, network state information 1 shown in 5a, for example, the ready state) to the network controller 400 by using the energy consumption management module 302. The network state information 1 may be used to notify the network controller 400 to set a power state of a switch that needs to be used for a current target job to the available state.

The job scheduler 300 does not need to care about which power state of a switch that needs to be used for the current target job corresponding to the computing node 502 or which power state of a port of the switch, and only needs to notify the network controller 400 to set the power state of the switch that needs to be used for the current target job or the power state of the port of the switch to the available state.

The job scheduler 300 and the network controller 400 may agree on the network state information 1 and the network state information 2 in advance.

The network state information 1 shown in FIG. 5a may be in the ready state.

The energy consumption management module 302 in the job scheduler 300 may be configured with an RPC interface connected to the network controller 400. The energy consumption management module 302 may send the allocation information of the computing node of the to-be-executed target job and the network state information 1 to the network controller 400 through the RPC interface.

As shown in FIG. 5a, the network controller 400 may determine, based on the allocation information of the computing node, a first switch 601 configured to process the to-be-executed target job or a port of the first switch 601, and when power states of the first switch 601 and the port of the first switch 601 cannot meet a service execution requirement of the target job, the network controller 400 may control the power states of the first switch 601 and the port of the first switch 601, to meet the service execution requirement of the target job.

As shown in FIG. 5a, after the network controller 400 adjusts the power state of the first switch 601 that needs to be used for the target job, the network controller 400 may return the network state information 2 (which is the same as the network state information 1, for example, the foregoing ready state) to the energy consumption management module 302 of the job scheduler 300.

In a possible implementation, if the network controller 400 determines that a current power state of the target switch 601 can meet the execution requirement of the target job, in other words, the current power state is the available state, the network controller 400 may return the preset information (the network state information 2 herein) to the energy consumption management module 302 in the job scheduler 300 without adjusting the power state of the target switch 601.

A network controller 400 side may also be configured with an RPC interface connected to the job scheduler 300, and the network controller 400 may return the network state information 2 to the job scheduler 300 through the RPC interface.

The energy consumption management module 302 may receive the network state information 2 from the network controller 400, and the energy consumption management module 302 determines that the network state information 2 replied by the network controller 400 is the same as network state information 1 that is needed and that is sent to the network controller 400 previously, so that the energy consumption management module 302 may notify the task service module 304 of the network state information 2 (which may also be another notification message indicating that a job can be delivered) replied by the network controller 400.

As shown in FIG. 5a, after receiving the network state information 2 from the energy consumption management module 302, the task service module 304 may deliver the to-be-executed target job received from the job queue management module 303 to a corresponding computing node 502, so that the computing node 502 starts to execute the target job. In this way, before the target job is executed by the computing node 502, the power states of the first switch 601 that needs to be used for the current target job and a port that needs to be used are already adjusted to the available state by using the network controller 400. In this way, it can be ensured that after the target job is delivered to the computing node 502, the power state of the first switch 601 can support forwarding of related service data of the target job from the computing node 502, to avoid impact on execution of the target job due to adjustment of the power state of the first switch 601, avoid interruption of the target job, and ensure reliable execution of the target job.

In this way, in this implementation, before delivering the to-be-executed target job to a corresponding computing node, the job scheduler 300 first sends node allocation information corresponding to the to-be-executed job to the network controller 400, so that the network controller 400 controls a power state of a switch corresponding to the corresponding computing node, and controls the power state to be the available state. In this way, before the target job is executed by the corresponding computing node, a power state of a switch configured to forward related service data of the target job and a power state of a port of the switch may be adjusted to the available state, so that a case in which execution of the target job is interrupted due to adjustment of the power state of the switch processing the target job can be avoided.

In a possible implementation, as shown in FIG. 5a, regardless of whether a power state of the first switch 601 or a port that is of the first switch 601 and that needs to be used is adjusted and changed by using the network controller 400, each time the job scheduler 300 shown in FIG. 5a sends allocation information of a computing node, the network controller 400 shown in FIG. 5a needs to return preset information once, for example, the network state information 2, to indicate that the job scheduler 300 may deliver the target job to the computing node. Then, when receiving the preset information, the job scheduler 300 may deliver the target job to the corresponding computing node 502 to start execution of the job.

In a possible implementation, in FIG. 5a, before delivering the to-be-executed target job to the corresponding computing node 502 to execute the job, the task service module 304 needs to wait for the network state information 2 returned by the network controller 400, to ensure that the power state of the first switch 601 configured to forward the service data related to the target job is the available state.

In a possible implementation, after the network controller 400 receives, for a plurality of times, the allocation information of the computing node from the energy consumption management module 302 in the job scheduler 300, the network controller 400 may determine switches or ports of the switches that are in a topology relationship and on which rate reduction or power-off processing is performed, to reduce network power consumption of the data center cluster. After performing rate reduction or power-off on some switches or ports of the switches, the network controller 400 may not need to notify the job scheduler 300, and does not need to return the preset information.

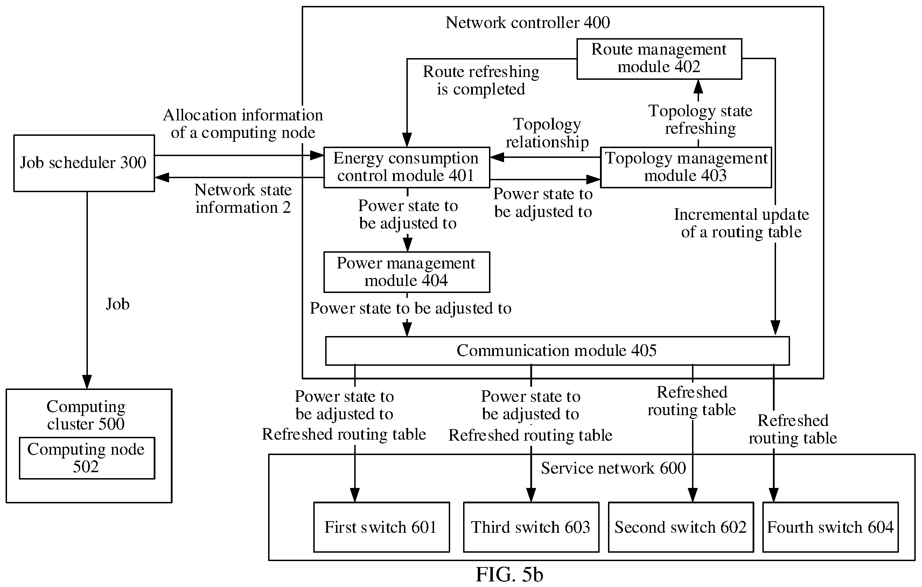

With reference to any one of the foregoing implementations, FIG. 5b shows an example of a diagram of interaction between modules in a network controller 400 and another node in a data center cluster.

As shown in FIG. 5b, the network controller 400 may include but is not limited to an energy consumption control module 401, a route management module 402, a topology management module 403, a power management module 404, a communication module 405, and the like.

In the initialization process of the data center cluster shown in FIG. 2a, the topology management module 403 shown in FIG. 5b may collect a link state (a connected state or a disconnected state) of each switch in the data center cluster and a connection relationship between nodes in the data center cluster during initialization of the network controller 400, to generate network topology information.

In the initialization process of the data center cluster shown in FIG. 2a, the route management module 402 may deliver a generated routing table of each switch to a corresponding switch by using the communication module 405 shown in FIG. 5b.

In the initialization process of the data center cluster shown in FIG. 2a, the energy consumption control module 401 may obtain and store a current power state of each switch in the service network 600 shown in FIG. 2a.

In a running process of the general-purpose server cluster 800 shown in FIG. 2a, as shown in FIG. 5b, the energy consumption control module 401 of the network controller 400 may receive allocation information of a computing node from a job scheduler 300.

The energy consumption control module 401 may be configured with an RPC interface connected to the job scheduler 300, and the energy consumption control module 401 may receive, from the job scheduler 300 through the RPC interface, allocation information of a computing node (for example, a computing node 502) of a to-be-executed target job.

Based on the received allocation information of the computing node, power state control performed by the energy consumption control module 401 on the switch may be divided into a power consumption reduction control process and/or a power consumption increase control process.

In a possible implementation, the following describes a process in which the network controller 400 reduces power consumption of the switch.

The energy consumption control module 401 shown in FIG. 5b continuously receives job scheduling information (for example, computing node information needed by a to-be-executed job) sent by the job scheduler 300, and the energy consumption control module 401 may obtain a topology relationship from the topology management module 403, to determine, based on the topology relationship, which switches (one or more switches) or which ports (one or more ports) of which switches in the service network 600 shown in FIG. 2a execute a job at a low frequency, and/or do not execute a job for more than a preset period of time. Therefore, power consumption of these switches and corresponding ports of the switches needs to be reduced.

The energy consumption control module 401 may record, each time after receiving the job scheduling information, which switches or ports of the switches that are in the topology relationship and that need to execute a job; and may determine, by collecting statistics on switches or ports of the switches that need to execute a job and that are recorded in a period of time, which switches or ports of the switches that are in the topology relationship and that do not execute a job for a long time or have a low frequency of executing a job. In this way, the energy consumption control module 401 may monitor, based on the job scheduling information received for a plurality of times, a traffic passing situation of a switch and a port in a period of time, to determine which switches or which ports of which switches have no service traffic for a long time or have a low frequency of passing service traffic in the period of time. In this way, a switch whose power consumption needs to be reduced or a port of the switch may be determined, to perform power consumption reduction adjustment of a power state on the switch or the port of the switch.

After determining to reduce power consumption of a first switch 601, the energy consumption control module 401 may determine a first power state to which the first switch 601 is to be adjusted.

The energy consumption control module 401 may determine, based on a related implementation of Example 1, the first power state to which the first switch 601 or a port of the first switch 601 is to be adjusted.

In this way, in this embodiment of this application, the network controller 400 may implement more refined control on a power state of a switch in a multi-level energy consumption management manner in a sequence of decreasing a port link rate of the switch, powering off a port of the switch, and powering off a data plane of the switch. In comparison with a manner in which an idle switch is directly powered off in a related technology, an energy consumption optimization effect is better.

In a possible implementation, the following describes a process in which the network controller 400 increases power consumption of the switch.

The energy consumption control module 401 shown in FIG. 5b may receive job scheduling information sent by the job scheduler 300, and the energy consumption control module 401 may obtain a topology relationship from the topology management module 403, to determine, based on the topology relationship, a third switch 603 (one or more switches) that is in the service network 600 shown in FIG. 2a and that is configured to execute the target job and at least one target port that needs to be used in the third switch 603. The target port that needs to be used in the third switch 603 is configured to forward related service data of the target job.

As described in the foregoing embodiment, in a system initialization process, the network controller 400 may obtain current power states of each switch and a port of the switch. Even after a system is initialized and before the network controller 400 receives the allocation information of the computing node sent by the job scheduler 300, the power state of the switch or the port of the switch is updated, the network controller 400 may also obtain updated power states of each switch and the port of the switch.

In a possible implementation, when determining that current power states of the third switch 603 and a target port of the third switch 603 can meet a service requirement for executing the target job, the energy consumption control module 401 may not adjust the power states of the target switch and the target port of the target switch.

When determining that the current power states of the third switch 603 and the target port of the third switch 603 cannot meet the service requirement for executing the target job, the energy consumption control module 401 may determine, based on a related implementation of Example 2, a second power state to which the third switch 603 or the port of the third switch 603 is to be adjusted.

In this way, in this embodiment of this application, the network controller 400 may implement the more refined control on the power state of the switch in the multi-level energy consumption management manner in a sequence of powering on the data plane of the switch, powering on the port of the switch, and increasing the port link rate of the switch. The power management manner is more flexible, so that energy consumption of a network node can be reduced as much as possible while a data exchange requirement of a current to-be-executed service is met.

As shown in FIG. 5b, the energy consumption control module 401 may determine, based on the received allocation information of the computing node and the topology relationship obtained from the topology management module 403, a switch or a port of the switch whose power state is to be adjusted (power consumption reduction or power consumption increase).

The energy consumption control module 401 may obtain a current power state of the switch or the port of the switch whose power state is to be adjusted (the power consumption reduction or the power consumption increase), and determine, according to a preset power consumption policy (a preset power consumption reduction policy or a preset power consumption increase policy), a power state (for example, the first power state or the second power state) to which the switch and the port of the switch are to be adjusted.

In a possible implementation, when the network controller 400 adjusts the power state of the first switch 601 or the third switch 603, and adjustment content includes only adjustment of the link rate of the port of the switch, but does not include power-on/off of the port of the switch or power-on/off of the data plane of the switch, as shown in FIG. 5b, the energy consumption control module 401 may send, to the power management module 404, a power state to which the switch (or a target port of the switch) is to be adjusted, the power management module 404 then sends, to the communication module 405, the power state to be adjusted to, and the communication module 405 may deliver, to a corresponding switch, the power state to which the first switch 601 or the third switch 603 is to be adjusted, to adjust a link rate of a corresponding port. In this process, the network controller 400 does not need to refresh a topology state and a routing table by using the topology management module 403 and the route management module 402.

The power management module 404 shown in FIG. 5b may invoke an interface provided by the energy consumption control module 401 to obtain the power state to which the first switch 601 or the third switch 603 is to be adjusted and that is provided by the energy consumption control module 401, and then the power management module 404 may invoke an interface of the first switch 601 or the third switch 603 to deliver, to the corresponding switch, a corresponding power state to be adjusted to.

The power management module 404 may be configured with communication interfaces of various types of switches, to deliver a power state to a corresponding switch by invoking a communication interface of a corresponding switch. Therefore, when the network controller 400 performs power control on different types of switches, an internal module of the network controller 400 may communicate with the various types of switches by using the power management module 404 without performing reconfiguration based on a protocol difference of the switches, to perform power control on the various types of switches. This may be universal to power control of the various types of switches.

In a possible implementation, when the network controller 400 adjusts the power state of the first switch 601 or the third switch 603, and the adjustment content includes the power-on/off of the port, and/or the power-on/off of the data plane of the switch, and optionally, further includes adjustment of a link rate of a port of a target switch, as shown in FIG. 5b, the energy consumption control module 401 may send, to the topology management module 403, the power state to be adjusted to, so that the topology management module 403 updates topology state information in network topology information based on the power state to which the first switch 601 or the third switch 603 is to be adjusted; after the topology state information is updated, the route management module 402 may update a routing table related to an updated topology state based on the refreshed topology state information; and deliver the updated routing table to the first switch 601, the third switch 603, the second switch 602, and the fourth switch 604 by using the communication module 405. A definition of the switch herein is the same as that of the switch in FIG. 4a and FIG. 4b. Details are not described herein again.

When a target port of a switch is powered on or powered off, all links connected to the target port in the topology relationship may be affected. In this case, the route management module 402 may refresh routing information related to the target port based on a power state (for example, a power-off state or a power-on state) to which the target port is to be adjusted, to implement incremental update (including at least one of adding, deleting, or modifying the routing information) of a routing table of a related switch.

When a data plane of a switch is powered on or powered off, all links connected to the switch in the topology relationship may be affected. In this case, the route management module 402 may refresh routing information related to the switch, to implement incremental update of a routing table of a related switch.

In an implementation of this application, the network controller 400 in this application does not need to re-plan a route, and does not need to reinitialize a global route, but only needs to incrementally add or modify routing information related to a switch whose power state changes or a port of the switch, so that a route update speed is accelerated, impact on a data center network is small, and flexibility is stronger.

In a possible implementation, when the network controller 400 adjusts the power state of the switch, the adjustment content includes that a power state of a target port of the switch is switched from the power-on state to the power-off state, and/or a power state of a data plane of the switch is switched from the power-on state to the power-off state. To avoid interruption of a service executed on the switch or the target port of the switch, the network controller 400 may first refresh, based on a power state change of the switch or the target port of the switch, a routing table of a switch whose route changes, and then control and change the power state of the switch, to avoid a problem that a service executed on an associated switch is interrupted because the switch or the port of the switch is powered off first and then a routing table of the switch associated with the powered-off switch is refreshed.

In a possible implementation, an embodiment of this application provides a service execution apparatus, applied to a computing system. The service execution apparatus includes a scheduler and a network controller.

The scheduler is configured to schedule, for a received service, a computing resource for executing the service, and send information about the computing resource to the network controller. The network controller is configured to determine, based on the information about the computing resource, a network device that needs to be used when the computing resource executes the service. The network controller is configured to: determine a state of the network device, and when determining that the state of the network device is a state in which the service can be executed, return indication information to the scheduler. The scheduler is configured to send the service to the computing resource based on the indication information, to execute the service.

In a possible implementation, the network controller is specifically configured to determine, based on a network topology and the information about the computing resource that are stored in the network controller, the network device that needs to be used when the computing resource executes the service. The network topology includes a diagram of a connection relationship between computing resources that are in the computing system and that are connected by using the network device.

In a possible implementation, the network topology further includes a state of each device in the network, and the network controller is specifically configured to: when the network controller determines, based on the network topology, that the network device is in the power-off state, send a power-on instruction to the network device, to enable the network device; or when the network controller determines, based on the network topology, that the network device is in the power-on state, but a port configured to connect to the computing resource is in an abnormal working state, send a power-on instruction of the port to the network device, to adjust the port to be in a normal working state.

In a possible implementation, the network controller is further configured to record information about the network device that is determined by the network controller and that needs to be used when the computing resource executes the service. The network controller is further configured to: at an interval of a period of time, determine, based on information that is recorded by the network controller and that is about network devices corresponding to a plurality of services, a network device that needs to be adjusted in the network topology, and determine an adjustment policy. The network controller is further configured to send the adjustment policy to the network device that needs to be adjusted, to indicate the network device to adjust the state of the network device according to the adjustment policy.

In a possible implementation, the network controller is specifically configured to: when determining that network device in the network topology is in the power-on state and a quantity of times that the network device is not used exceeds a first threshold, determine that the network device is the network device that needs to be adjusted, where the adjustment policy is powering off the network device; when determining that network device in the network topology is in the power-on state, and a quantity of times that a first port in the network device is not used exceeds a second threshold, determine that the network device is the network device that needs to be adjusted, where the adjustment policy is powering off the first port; when determining that network device in the network topology is in the power-on state, a quantity of times that a first port in the network device is not used exceeds a second threshold, and a rate of the first port is not a lowest rate, determine that the network device is the network device that needs to be adjusted, where the adjustment policy is performing rate reduction processing on the first port; or when determining that network device in the network topology is in the power-on state, a quantity of times that a first port in the network device is not used exceeds a second threshold, and a rate of the first port in the network device is a lowest rate, determine that the network device is the network device that needs to be adjusted, where the adjustment policy is powering off the first port.

In a possible implementation, the network controller is further configured to: determine, according to the adjustment policy, a network device that needs to adjust a route in the network topology, and determine adjusted routing information; and send the adjusted routing information to the network device that needs to adjust the route, to enable the network device to update the route.

Effects and implementations of the service execution apparatus in the foregoing implementations are similar to effects of the methods in the foregoing implementations. Details are not described herein again.

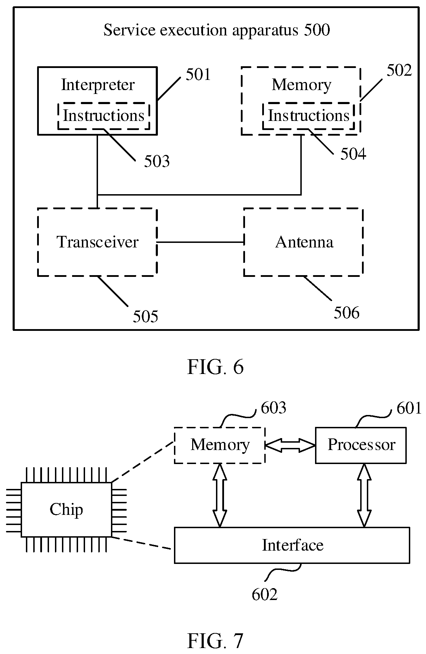

The following describes an apparatus provided in an embodiment of this application, as shown in FIG. 6.

FIG. 6 is a diagram of a structure of a service execution apparatus according to an embodiment of this application. As shown in FIG. 6, the service execution apparatus 500 may include a processor 501 and a transceiver 505, and optionally, may further include a memory 502.

The transceiver 505 may be referred to as a transceiver unit, a transceiver device, a transceiver circuit, or the like, and is configured to implement a receiving function and a sending function. The transceiver 505 may include a receiver and a transmitter. The receiver may be referred to as a receiving device, a receiver circuit, or the like, and is configured to implement the receiving function. The transmitter may be referred to as a transmitting device, a transmitter circuit, or the like, and is configured to implement the sending function.

The memory 502 may store a computer program, software code, or instructions 504, where the computer program, the software code, or the instructions 504 may also be referred to as firmware. The processor 501 may control a MAC layer and a PHY layer by running a computer program, software code, or instructions 503 in the processor 501, or by invoking the computer program, the software code, or the instructions 504 stored in the memory 502, to implement the service execution method provided in embodiments of this application. The processor 501 may be a central processing unit (central processing unit, CPU), and the memory 502 may be, for example, a read-only memory (read-only memory, ROM) or a random access memory (random access memory, RAM).

The processor 501 and the transceiver 505 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The service execution apparatus 500 may further include an antenna 506. Modules included in the service execution apparatus 500 are merely examples for description. This is not limited in this application.

The structure of the service execution apparatus may not be limited by FIG. 6. The service execution apparatus may be an independent device or may be a part of a large device. For example, implementation forms of the service execution apparatus may be:
(1) an independent integrated circuit IC, a chip, or a chip system or subsystem; (2) a set including one or more ICs, where optionally, the set of ICs may also include a storage component for storing data and instructions; (3) a module that can be embedded in another device; (4) a vehicle-mounted device or the like; or (5) others.

For a case in which the implementation form of the service execution apparatus is a chip or a chip system, refer to a diagram of a structure of a chip shown in FIG. 7. The chip shown in FIG. 7 includes a processor 601 and an interface 602. There may be one or more processors 601, and there may be a plurality of interfaces 602. Optionally, the chip or the chip system may include a memory 603.

All related content of the steps in the foregoing method embodiments may be cited in function descriptions of the corresponding functional modules. Details are not described herein again.

Based on a same technical concept, an embodiment of this application further provides a computer-readable storage medium. The computer-readable storage medium stores a computer program, the computer program includes at least one segment of code, and the at least one segment of code may be executed by a computer, to control the computer to implement the foregoing method embodiments.

Based on the same technical concept, an embodiment of this application further provides a computer program. When the computer program is executed, the foregoing method embodiments are implemented.

A part or all of the program may be stored in a storage medium encapsulated with a processor, or a part or all of the program may be stored in a memory that is not encapsulated with a processor.

Based on the same technical concept, an embodiment of this application further provides a chip, including a processor. The processor may implement the foregoing method embodiments.

Methods or algorithm steps described with reference to the content disclosed in this embodiment of this application may be implemented by hardware, or may be implemented by a processor by executing a software instruction. The software instruction may include a corresponding software module. The software module may be stored in a random access memory (random access memory, RAM), a flash memory, a read only memory (read only memory, ROM), an erasable programmable read only memory (erasable programmable ROM, EPROM), an electrically erasable programmable read only memory (electrically EPROM, EEPROM), a register, a hard disk drive, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by the software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A service execution method, applied to a computing system, wherein the computing system comprises a scheduler and a network controller, and the method comprises:
scheduling, by the scheduler for a received service, a computing resource for executing the service, and sending information about the computing resource to the network controller;
determining, by the network controller based on the information about the computing resource, a network device that needs to be used when the computing resource executes the service;
determining, by the network controller, a state of the network device, and when determining that the state of the network device is a state in which the service can be executed, returning indication information to the scheduler; and
sending, by the scheduler, the service to the computing resource based on the indication information, to execute the service.

2. The method according to claim 1, wherein the determining, by the network controller based on the information about the computing resource, a network device that needs to be used when the computing resource executes the service comprises:
determining, by the network controller based on a network topology and the information about the computing resource that are stored in the network controller, the network device that needs to be used when the computing resource executes the service, wherein the network topology comprises a diagram of a connection relationship between computing resources that are in the computing system and that are connected by using the network device.

3. The method according to claim 2, wherein the network topology further comprises a state of each device in a network, and the determining, by the network controller, a state of the network device comprises:
when the network controller determines, based on the network topology, that the network device is in a power-off state, sending a power-on instruction to the network device, to enable the network device; or
when the network controller determines, based on the network topology, that the network device is in a power-on state, but a port configured to connect to the computing resource is in an abnormal working state, sending a power-on instruction of the port to the network device, to adjust the port to be in a normal working state.

4. The method according to any one of claims 1 to 3, wherein the method further comprises:
recording, by the network controller, information about the network device that is determined by the network controller and that needs to be used when the computing resource executes the service;
at an interval of a period of time, determining, by the network controller based on information that is recorded by the network controller and that is about network devices corresponding to a plurality of services, a network device that needs to be adjusted in the network topology, and determining an adjustment policy; and
sending, by the network controller, the adjustment policy to the network device that needs to be adjusted, to indicate the network device to adjust a state of the network device according to the adjustment policy.

5. The method according to claim 4, wherein the determining, by the network controller based on information that is recorded by the network controller and that is about network devices corresponding to a plurality of services, a network device that needs to be adjusted in the network topology, and determining an adjustment policy further comprises:
when determining that a network device in the network topology is in a power-on state, and a quantity of times that the network device is not used exceeds a first threshold, determining that the network device is the network device that needs to be adjusted, wherein the adjustment policy is powering off the network device;
when determining that a network device in the network topology is in a power-on state, and a quantity of times that a first port in the network device is not used exceeds a second threshold, determining that the network device is the network device that needs to be adjusted, wherein the adjustment policy is powering off the first port;
when determining that a network device in the network topology is in a power-on state, a quantity of times that a first port in the network device is not used exceeds a second threshold, and a rate of the first port is not a lowest rate, determining that the network device is the network device that needs to be adjusted, wherein the adjustment policy is performing rate reduction processing on the first port; or
when determining that a network device in the network topology is in a power-on state, a quantity of times that a first port in the network device is not used exceeds a second threshold, and a rate of the first port in the network device is a lowest rate, determining that the network device is the network device that needs to be adjusted, wherein the adjustment policy is powering off the first port.

6. The method according to any one of claims 1 to 5, wherein before the sending the adjustment policy to the network device that needs to be adjusted, to indicate the network device to adjust a state of the network device according to the adjustment policy, the method further comprises:
determining, by the network controller according to the adjustment policy, a network device that needs to adjust a route in the network topology, and determining adjusted routing information; and
sending, by the network controller, the adjusted routing information to the network device that needs to adjust the route, to enable the network device to update the route.

7. A computing system, wherein the computing system comprises a scheduler and a network controller, wherein
the scheduler is configured to: schedule, for a received service, a computing resource for executing the service, and send information about the computing resource to the network controller;
the network controller is configured to determine, based on the information about the computing resource, a network device that needs to be used when the computing resource executes the service;
the network controller is configured to: determine a state of the network device, and when determining that the state of the network device is a state in which the service can be executed, return indication information to the scheduler; and
the scheduler is configured to send the service to the computing resource based on the indication information, to execute the service.

8. The system according to claim 7, wherein
the network controller is specifically configured to determine, based on a network topology and the information about the computing resource that are stored in the network controller, the network device that needs to be used when the computing resource executes the service, wherein the network topology comprises a diagram of a connection relationship between computing resources that are in the computing system and that are connected by using the network device.

9. The system according to claim 8, wherein the network topology further comprises a state of each device in a network, and the network controller is specifically configured to:
when the network controller determines, based on the network topology, that the network device is in a power-off state, send a power-on instruction to the network device, to enable the network device; or
when the network controller determines, based on the network topology, that the network device is in a power-on state, but a port configured to connect to the computing resource is in an abnormal working state, send a power-on instruction of the port to the network device, to adjust the port to be in a normal working state.

10. The system according to any one of claims 7 to 9, wherein
the network controller is further configured to record information about the network device that is determined by the network controller and that needs to be used when the computing resource executes the service;
the network controller is further configured to: at an interval of a period of time, determine, based on information that is recorded by the network controller and that is about network devices corresponding to a plurality of services, a network device that needs to be adjusted in the network topology, and determine an adjustment policy; and
the network controller is further configured to send the adjustment policy to the network device that needs to be adjusted, to indicate the network device to adjust a state of the network device according to the adjustment policy.

11. The system according to claim 10, wherein the network controller is specifically configured to:
when determining that a network device in the network topology is in a power-on state, and a quantity of times that the network device is not used exceeds a first threshold, determine that the network device is the network device that needs to be adjusted, wherein the adjustment policy is powering off the network device;
when determining that a network device in the network topology is in a power-on state, and a quantity of times that a first port in the network device is not used exceeds a second threshold, determine that the network device is the network device that needs to be adjusted, wherein the adjustment policy is powering off the first port;
when determining that a network device in the network topology is in a power-on state, a quantity of times that a first port in the network device is not used exceeds a second threshold, and a rate of the first port is not a lowest rate, determine that the network device is the network device that needs to be adjusted, wherein the adjustment policy is performing rate reduction processing on the first port; or
when determining that a network device in the network topology is in a power-on state, a quantity of times that a first port in the network device is not used exceeds a second threshold, and a rate of the first port in the network device is a lowest rate, determine that the network device is the network device that needs to be adjusted, wherein the adjustment policy is powering off the first port.

12. The system according to any one of claims 7 to 11, wherein the network controller is further configured to:
determine, according to the adjustment policy, a network device that needs to adjust a route in the network topology, and determine adjusted routing information; and
send the adjusted routing information to the network device that needs to adjust the route, to enable the network device to update the route.

13. A computer-readable storage medium, comprising a computer program, wherein when the computer program is run on a computer or a processor, the computer or the processor is enabled to perform the method according to any one of claims 1 to 6.

14. A service execution apparatus, comprising one or more interface circuits and one or more processors, wherein the interface circuit is configured to: receive a signal from a memory, and send the signal to the processor, wherein the signal comprises computer instructions stored in the memory; and when the processor executes the computer instructions, the processor is configured to perform the method according to any one of claims 1 to 6.

15. A computer program product, wherein the computer program product comprises a software program, and when the software program is executed by a computer or a processor, steps of the method according to any one of claims 1 to 6 are performed.
